# EUROPEAN PATENT APPLICATION

(11) **EP 4 709 029 A2**
(43) Date of publication of application: **11.03.2026**
(21) Application number: 24811246.8
(22) Date of filing: 29.03.2024
(51) Int. Cl.: H04W 76/15, H04W 72/27, H04L 5/00, H04W 88/08, H04W 92/20

(54) **ELECTRONIC DEVICE AND METHOD FOR COMMUNICATION BETWEEN DISTRIBUTED UNITS IN WIRELESS COMMUNICATION SYSTEM**

(30) Priority: 19.05.2023 KR 20230065312
(71) Applicant: Samsung Electronics Co., Ltd., Suwon-si, Gyeonggi-do 16677 (KR)
(72) Inventor: YOO, Seungbo, Suwon-si Gyeonggi-do 16677 (KR); LIM, Hyungtaig, Suwon-si Gyeonggi-do 16677 (KR)
(74) Representative: Gulde & Partner
(86) International application number: PCT/KR2024/004033
(87) International publication number: WO 2024/242307

(57) **Abstract**

According to embodiments, an electronic device of a first distributed unit (DU) is provided. The electronic device may comprise a memory, at least one transceiver, and at least one processor coupled to the memory and the at least one transceiver. The at least one processor may be configured to transmit a setup request message to a second DU through a communication interface between the first DU and the second DU. The at least one processor may be configured to receive a setup response message from the second DU.

## Description

### [Technical Field]

The present disclosure relates to a wireless communication system, and more specifically, to an electronic device and a method for communication between distributed units in the wireless communication system.

### [Background Art]

In order to meet the increasing demand for wireless data traffic after the commercialization of 4G (4^{th} generation) communication systems, efforts have been made to develop improved 5G (5^{th} generation) communication systems or pre-5G communication systems. For this reason, 5G communication systems or pre-5G communication systems are referred to as Beyond 4G Network communication systems or Post Long Term Evolution (LTE) systems.

To achieve high data transmission rates, the implementation of 5G communication systems in a millimeter wave (mmWave) band (e.g., 60 GHz band) is being considered. In order to mitigate a path loss of radio waves in the millimeter wave band and extend a propagation distance of the radio waves, beamforming, massive MIMO, Full Dimensional MIMO (FD-MIMO), array antenna, analog beam-forming, and large scale antenna technologies are being discussed in the 5G communication system.

In addition, in order to enhance network performance, technologies such as evolved small cells, advanced small cells, cloud radio access network (cloud RAN), ultra-dense network, device to device communication (D2D), wireless backhaul, moving network, cooperative communication, coordinated multi-points (CoMP), and interference cancellation are being developed in 5G communication systems.

In addition, advanced coding modulation (ACM) techniques such as hybrid frequency shift keying and quadrature amplitude modulation (FQAM) and sliding window superposition coding (SWSC) and advanced access technologies such as filter bank multi-carrier (FBMC), non-orthogonal multiple access (NOMA), and sparse code multiple access (SCMA) are being developed in the 5G systems.

With the commercialization of 5G systems and new radio or next radio (NR) to meet the demand for wireless data traffic, high-data-rate services are being provided to users through 5G systems, similar to 4G, and various wireless communication services, including Internet of Things (IoT) and services requiring high reliability for specific purposes, are expected to be provided. In a current system where the fourth-generation communication system and the fifth-generation communication system are mixed, open radio access network (O-RAN) established by operators and equipment providers defines various standards in an application protocol of E2 interface between an E2 node and a near-real-time (Near-RT) radio access network (RAN) intelligent controller (RIC).

Looking back at the development process of wireless communication generations, technologies have been developed mainly for services targeting humans, such as voice, multimedia, and data. After the commercialization of the 5^{th} Generation (5G) communication system, it is expected that the number of connected devices will increase explosively and be connected to communication networks. Examples of objects connected to the network include vehicles, robots, drones, home appliances, displays, smart sensors installed in various infrastructures, construction machinery, and factory equipment. Mobile devices are expected to evolve into various form factors, such as augmented reality glasses, virtual reality headsets, and holographic devices. In the 6^{th} Generation (6G) era, efforts are being made to develop an improved 6G communication system to connect hundreds of billions of devices and objects and provide various services. For this reason, the 6G communication system is referred to as a system beyond 5G.

In the 6^{th} Generation (6G) communication system, which is predicted to be realized around 2030, a maximum transmission speed is tera (i.e., 1,000 giga) bit per second (bps), and the wireless latency is 100 microseconds (µsec). That is, compared to the 5G communication system, a transmission speed in the 6G communication system is 50 times faster, and the wireless latency is reduced to one-tenth.

To achieve such high data transmission speed and ultra-low latency, the 6G communication system is being considered for implementation in a Terahertz (THz) band (e.g., such 95 Gigahertz (GHz) to 3 THz). The Terahertz band is expected to place greater importance on technologies that ensure signal reach distance, that is, coverage, due to more serious path loss and atmospheric absorption phenomena compared to the millimeter-wave (mmWave) band introduced in 5G. As key technologies to ensure coverage, multiple antenna transmission technologies such as radio frequency (RF) components, antennas, a new waveform superior to orthogonal frequency division multiplexing (OFDM) in terms of coverage, beamforming, massive multiple-input and multiple-output (massive MIMO), full dimensional MIMO (FD-MIMO), array antenna, and large-scale antenna need to be developed. In addition, to improve a coverage of terahertz band signals, new technologies such as metamaterial-based lenses and antennas, high-dimensional spatial multiplexing technology using orbital angular momentum (OAM), and reconfigurable intelligent surface (RIS) are being discussed.

In order to improve frequency efficiency and enhance the system network, the 6G communication system is developing technologies such as a full duplex technology, which enables the uplink and downlink to utilize simultaneously the same frequency resources, a network technology that integrally utilizes satellites and high-altitude platform stations (HAPS), a network structure innovation technology that supports mobile base stations and enables network operation optimization and automation, a dynamic spectrum sharing technology through collision avoidance based on spectrum usage prediction, an artificial intelligence (AI)-based communication technology that realizes system optimization by internalizing an end-to-end AI support function and utilizing AI from a design stage, and a next-generation distributed computing technology that realizes services with complexities that exceed limits of terminal computing capabilities by utilizing ultra-high-performance communication and computing resources (e.g., Mobile Edge Computing (MEC), cloud, and the like). In addition, efforts are continuously being made to strengthen connectivity between devices, further optimize the network, promote the softwareization of network entities, and increase the openness of wireless communication through the design of new protocols to be used in the 6G communication system, the implementation of hardware-based security environments, the development of mechanisms for the safe utilization of data, and the development of technologies for maintaining privacy.

Due to the research and development of the 6G communication system, it is expected that the next hyper-connected experience will become possible through the hyper-connectivity of the 6G communication system, which includes not only interconnection between objects but also connections between humans and objects. Specifically, the 6G communication system is expected to enable the provision of services such as truly immersive eXtended Reality (XR), high-fidelity mobile hologram, and digital replica. In addition, services such as remote surgery, industrial automation, and emergency response will be provided through the 6G communication system with enhanced security and reliability, which will be applied in various fields such as industry, healthcare, automotive, and home appliances.

In 6G communication systems, the functions of the RAN are expected to be further segmented into service subscribers and service providers. In service-based networks, service subscription verification procedures for service subscription status will be applied in various functions.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

According to embodiments, a method performed by a first distributed unit (DU) is provided. The method may comprise transmitting, to a second DU through a communication interface between the first DU and the second DU, a DU group setup request message. The method may comprise receiving, from the second DU, a DU group setup response message. The DU group setup request message may include at least one of identification information related to the first DU, address information related to the first DU, version information of the first DU, cell information for each cell provided by the first DU, information indicating whether the first DU supports a carrier aggregation (CA) function, or information indicating whether the first DU supports a dual connectivity (DC) function. The DU group setup response message may include at least one of identification information related to the second DU, address information related to the second DU, version information of the second DU, cell information for each cell provided by the second DU, information indicating whether the second DU supports the CA function between DUs, or information indicating whether the second DU supports the DC function.

According to embodiments, an electronic device of a first distributed unit (DU) is provided. The electronic device may comprise memory, at least one transceiver, and at least one processor coupled to the memory and the at least one transceiver. The at least one processor may be configured to transmit, to a second DU through a communication interface between the first DU and the second DU, a DU group setup request message. The at least one processor may be configured to receive, from the second DU, a DU group setup response message. The DU group setup request message may include at least one of identification information related to the first DU, address information related to the first DU, version information of the first DU, cell information for each cell provided by the first DU, information indicating whether the first DU supports a carrier aggregation (CA) function, or information indicating whether the first DU supports a dual connectivity (DC) function. The DU group setup response message may include at least one of identification information related to the second DU, address information related to the second DU, version information of the second DU, cell information for each cell provided by the second DU, information indicating whether the second DU supports the CA function between DUs, or information indicating whether the second DU supports the DC function.

According to embodiments, a non-transitory recording medium is provided. The non-transitory recording medium may comprise memory storing a program including instructions. When the instructions are executed, the electronic device may be configured to perform procedures for signaling in an interface between DUs. When the instructions are executed, the instructions may cause the electronic device to transmit, to a second DU through a communication interface between the first DU and the second DU, a DU group setup request message. When the instructions are executed, the instructions may cause the electronic device to receive, from the second DU, a DU group setup response message. The DU group setup request message may include at least one of identification information related to the first DU, address information related to the first DU, version information of the first DU, cell information for each cell provided by the first DU, information indicating whether the first DU supports a carrier aggregation (CA) function, or information indicating whether the first DU supports a dual connectivity (DC) function. The DU group setup response message may include at least one of identification information related to the second DU, address information related to the second DU, version information of the second DU, cell information for each cell provided by the second DU, information indicating whether the second DU supports the CA function between DUs, or information indicating whether the second DU supports the DC function.

In embodiments, a method performed by a first distributed unit (DU) is provided. The method may comprise transmitting, to a second DU, a setup request message through a communication interface between the first DU and the second DU. The method may comprise receiving, from the second DU, a setup response message. The setup request message may include at least one of identification information related to the first DU or cell information for each cell provided by the first DU. The setup response message may include at least one of identification information related to the second DU or address information related to the second DU.

In embodiments, an electronic device of a first distributed unit (DU) is provided. The electronic device may comprise at least one processor and memory for storing instructions. The instructions, when executed by the at least one processor, may cause the electronic device to transmit, to a second DU, a setup request message through a communication interface between the first DU and the second DU, and to receive, from the second DU, a setup response message. The setup request message may include at least one of identification information related to the first DU or cell information for each cell provided by the first DU. The setup response message may include at least one of identification information related to the second DU or cell information for each cell provided by the second DU.

### [Description of the Drawings]

The above and other aspects, features, and advantages of certain embodiments of the present disclosure will become more apparent from the following description taken with the accompanying drawings.
FIGS. 1A to 1B illustrate examples of a wireless communication system according to embodiments of the present disclosure.
FIGS. 2A to 2C illustrate examples of a spectrum aggregation environment according to embodiments of the present disclosure.
FIG. 3 illustrates an example of a resource structure in a time domain and a frequency domain according to embodiments of the present disclosure.
FIG. 4A illustrates a protocol stack on a control plane according to embodiments of the present disclosure.
FIG. 4B illustrates a protocol stack on a user plane according to embodiments of the present disclosure.
FIG. 5 illustrates an example of spectrum aggregation between distributed units (DUs) according to embodiments of the present disclosure.
FIG. 6 illustrates an example of a control plane for spectrum aggregation between DUs according to embodiments of the present disclosure.
FIGS. 7A to 7B illustrate a DU group setup procedure according to embodiments of the present disclosure.
FIG. 7C illustrates a DU group modification procedure according to embodiments of the present disclosure.
FIG. 8 illustrates a DU group release procedure according to embodiments of the present disclosure.
FIG. 9 illustrates a resource status report procedure according to embodiments of the present disclosure.
FIG. 10A illustrates a secondary cell (SCell) configuration setup procedure according to embodiments of the present disclosure.
FIG. 10B illustrates an SCell configuration modification request procedure according to embodiments of the present disclosure.
FIG. 10C illustrates an SCell configuration modification required procedure according to embodiments of the present disclosure.
FIG. 10D illustrates an SCell configuration release procedure according to embodiments of the present disclosure.
FIG. 10E illustrates an SCell configuration release required procedure according to embodiments of the present disclosure.
FIG. 11 illustrates signal flows for SCell configuration setup according to embodiments of the present disclosure.
FIG. 12 illustrates signal flows for an SCell configuration modification procedure initiated by a central unit (CU) according to embodiments of the present disclosure.
FIG. 13 illustrates signal flows for an SCell configuration modification procedure initiated by a primary cell (PCell)-DU according to embodiments of the present disclosure.
FIG. 14 illustrates signal flows for an SCell configuration modification procedure initiated by an SCell-DU according to embodiments of the present disclosure.
FIG. 15 illustrates an example of a user plane for spectrum aggregation between DUs according to embodiments of the present disclosure.
FIG. 16 illustrates components of an electronic device according to embodiments of the present disclosure.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

The terms referring to a signal (e.g., signal, information, message, signaling), terms referring to a resource (e.g., symbol, slot, subframe, radio frame, subcarrier, resource element (RE), resource block (RB), bandwidth part (BWP), occasion), terms referring to an operation state (e.g., step, operation, procedure), terms referring to data (e.g., packet, user stream, information, bit, symbol, codeword), terms referring to a channel, terms referring to network entities, terms referring to components of a device, and the like, used in the following description are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments by using terms used in some communication standards (e.g., 3rd Generation Partnership Project (3GPP), extensible radio access network (xRAN), and open-radio access network (O-RAN)), but this is only an example for description. Various embodiments of the present disclosure may be easily modified and applied to other communication systems.

In the present disclosure, a signal quality may be, for example, at least one of a reference signal received power (RSRP), a beam reference signal received power (BRSRP), a reference signal received quality (RSRQ), a received signal strength indicator (RSSI), a signal to interference and noise ratio (SINR), a carrier to interference and noise ratio (CINR), a signal to noise ratio (SNR), an error vector magnitude (EVM), a bit error rate (BER), and a block error rate (BLER). In addition to the above examples, other terms having equivalent technical meanings or other metrics indicating channel quality may also be used. Hereinafter, in the present disclosure, when the signal quality is high, it means that a signal quality value related to a signal strength is large or a signal quality value related to an error rate is small. The higher the signal quality, the smoother a wireless communication environment may be ensured. In addition, an optimal beam may mean a beam having the highest signal quality among beams.

Currently, discussions are underway for the improvement and enhancement of the initial 5G mobile communication technology, considering services that the 5G mobile communication technology aimed to support, and physical layer standardization is in progress for technologies such as Vehicle-to-Everything (V2X), which assists driving decisions of autonomous driving vehicles based on their location and state information transmitted by the vehicle and enhances user convenience, New Radio Unlicensed (NR-U), which aims for system operation compliant with various regulatory requirements in unlicensed frequency bands, technology for reducing power consumption of NR terminals (UE Power Saving technology), Non-Terrestrial Network (NTN), which enables direct terminal-to-satellite communication for securing coverage in areas where communication with a terrestrial network is unavailable, and Positioning.

In addition, standardization in the field of wireless interface architecture/protocols is also in progress for technologies such as an Industrial Internet of Things (IIoT) for supporting new services through connection and convergence with other industries, an Integrated Access and Backhaul (IAB) providing nodes for expanding network service areas by integrally supporting wireless backhaul links and access links, Mobility Enhancement technologies including Conditional Handover and Dual Active Protocol Stack (DAPS) handover, and a 2-step random access (2-step RACH for NR) simplifying a random access procedure, and furthermore, standardization in the field of system architecture/services is also in progress for a 5G baseline architecture (e.g., a Service-Based Architecture, a Service-Based Interface) for applying Network Functions Virtualization (NFV) and Software-Defined Networking (SDN) technologies, and Mobile Edge Computing (MEC) that receives services based on a location of a terminal.

When such a 5G mobile communication system is commercialized, a rapidly increasing number of connected devices will be connected to communication networks, and accordingly, it is expected that enhancement of the functions and performance of the 5G mobile communication system and integrated operation of the connected devices will be required. To this end, new studies are to be conducted on eXtended Reality (XR) for efficiently supporting Augmented Reality (AR), Virtual Reality (VR), and Mixed Reality (MR), 5G performance improvement and complexity reduction using Artificial Intelligence (AI) and Machine Learning (ML), and AI service support, metaverse service support, and drone communications.

Furthermore, the advancement of such 5G mobile communication system could serve as the foundation for the development of technologies such as not only a new waveform to ensure coverage in the terahertz band of the 6G mobile communication technology, Multiple antenna transmission technologies such as Full dimensional MIMO (FD-MIMO), array antenna, and large-scale antenna, high-dimensional spatial multiplexing technology using metamaterial-based lenses and antennas and Orbital Angular Momentum (OAM) to improve coverage of terahertz band signals, and a Reconfigurable Intelligent Surface (RIS) technology, but also a full duplex technology, which enables the uplink and downlink to utilize simultaneously the same frequency resources, an artificial intelligence (AI)-based communication technology that realizes system optimization, by internalizing an end-to-end AI support function and utilizing satellite and AI from a design stage, and a next-generation distributed computing technology that realizes services with complexities that exceed limits of terminal computing capabilities by utilizing ultra-high-performance communication and computing resources.

Although 4G and/or 5G environments are illustrated as an example, this description does not limit the scope of the communication environments of the embodiments of the present disclosure. The technical principles according to the embodiments of the present disclosure may also be applied to 6G and post-6G communication technologies and network environments.

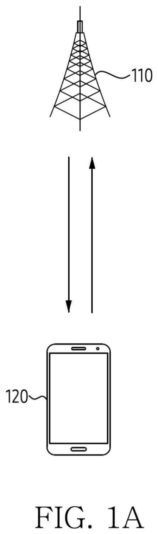

FIGS. 1A to 1B illustrate examples of a wireless communication system according to embodiments of the present disclosure.

Referring to FIG. 1A, FIG. 1A illustrates a base station 110 and a terminal 120 as a portion of nodes that utilize a wireless channel in a wireless communication system. FIG. 1A illustrates only one base station, but a wireless communication system may further include another base station that is identical or similar to the base station 110.

The base station 110 is a network infrastructure that provides wireless access to the terminal 120. The base station 110 has coverage defined based on a distance at which a signal may be transmitted. In addition to 'base station', the base station 110 may be referred to as an 'access point (AP)', 'eNodeB (eNB)', '5th generation node', 'next generation nodeB (gNB)', 'wireless point', 'transmission/reception point (TRP)' or other terms having equivalent technical meanings.

The terminal 120, which is a device used by a user, performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. At this time, a link (device-to-device link (D2D)) between the terminal 120 and the other terminal is referred to as a sidelink, and the sidelink may be used interchangeably with a PC5 interface. In some other embodiments, the terminal 120 may be operated without the user's involvement. According to an embodiment, the terminal 120, which is a device performing machine type communication (MTC), may not be carried by the user. Additionally, according to an embodiment, the terminal 120 may be a narrowband (NB)-internet of things (IoT) device.

In addition to 'terminal', the terminal 120 may also be referred to as 'user equipment (UE) ', 'customer premises equipment, (CPE) ', 'mobile station', 'subscriber station', 'remote terminal', 'wireless terminal', 'electronic device', 'user device', or other terms having equivalent technical meanings.

The base station 110 may perform beamforming with the terminal 120. The base station 110 and the terminal 120 may transmit and receive a wireless signal in a relatively low frequency band (e.g., frequency range 1 (FR 1) of NR). In addition, the base station 110 and the terminal 120 may transmit and receive a wireless signal in a relatively high frequency band (e.g., FR 2 (or FR 2-1, FR 2-2, FR 2-3) or FR 3), and a mmWave band (e.g., 28GHz, 30GHz, 38GHz, 60GHz). The base station 110 and the terminal 120 may perform beamforming to improve a channel gain. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with the resource transmitting the serving beams.

The terminal 120 may be configured with cells of the base station 110 through carrier aggregation (CA). The CA technology is a technology that increases frequency utilization efficiency of the terminal 120 and the base station 110 by connecting the terminal to homogeneous wireless communication cell groups having a common radio resource control entity and simultaneously using frequency resources on component carriers of respective cells located in different frequency bands for signal transmission and reception. The cells configured for CA may include one a primary cell (PCell) and one or more secondary cells (SCells).

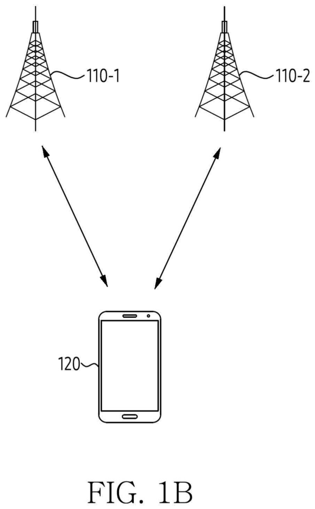

Referring to FIG. 1B, the terminal 120 may be configured in dual connectivity (DC) using the first base station 110-1 and the second base station 110-2. The DC technology is a technology that increases frequency utilization efficiency by allowing the terminal to simultaneously connect to two independent heterogeneous or homogeneous wireless communication cell groups having separate radio resource control entities and using frequency resources on component carriers of cells within respective cell groups located in different frequency bands for signal transmission and reception. It is a technology that the terminal 120 is connected to two different radio resource entities (e.g., the first base station 110-1 and the second base station 110-2) for using radio resources allocated by each radio resource entity. In MR-DC, a UE (e.g., the terminal 120) in a radio resource control (RRC) connected state (i.e., RRC_CONNECTED) may be configured to use radio resources provided by two independent schedulers. Each scheduler may be located in an NG-RAN node (e.g., the first base station 110-1 or the second base station 110-2). Herein, a node is a master node (MN), and another node is a secondary node (SN). The MN and SN are connected through a network interface, and the MN may be connected to a core network. The SN may or may not be connected to the core network.

The MN may provide a master cell group (MCG). The MN may be referred to as an M-NODE or M-NG-RAN node in addition to the MN. The MCG may include one or more cells. The MCG may include a primary cell (PCell). The MCG may include a plurality of aggregated cells. The MCG may include the PCell and one or more secondary cells (SCells). The SN may provide a secondary cell group (SCG). The SN may be referred to as an S-NODE or S-NG-RAN node in addition to the SN. The SCG may include one or more cells. The SCG may include a plurality of aggregated cells. The SCG may include a PCell and/or a SCell like the MCG. A cell functioning as a PCell within the SCG may be referred to as a primary secondary cell (PSCell). The sub-cell group may include a PSCell and one or more SCells. Hereinafter, as a term including PCell and PSCell, a special cell (SpCell) may be used. The Spcell means a primary cell of the MCG or SCG. In other words, the SpCell of the MCG indicates the PCell, and the SpCell of the SCG indicates the SCell.

The possible types of DCs may be defined as follows.
1) EN-DC: A dual connection in which an eNB is connected to an evolved packet core (EPC), and a terminal is connected to an eNB acting as an MN and an gNB acting as an SN. Here, the gNB may be referred to as an en-gNB, and the en-gNB may or may not be connected to the EPC.
2) NGEN-DC: A dual connection in which an eNB is connected to a 5G core (5GC), and a terminal is connected to an eNB acting as an MN and a gNB acting as an SN. Here, the eNB may be referred to as an ng-eNB.
3) NE-DC: A dual connection in which a gNB is connected to a 5GC, and a terminal is connected to a gNB acting as an MN and an eNB acting as an SN. Here, the eNB may be referred to as an ng-eNB.
4) NR-DC: A dual connection in which a gNB is connected to a 5GC, and a terminal is connected to a gNB acting as an MN and a gNB acting as an SN. The NR-DC may be used even when the UE is connected to a single gNB and performs both the role of MN and SN and configures both MCG and SCG.

The terminal 120 may support multi-radio (MR)-DC. The terminal 120 may be connected to the first base station 110-1 and the second base station 110-2. The first base station 110-1, which is an MN, and the second base station 110-2, which is an SN, may be connected to a terminal. DC technology may provide a higher data rate together with carrier aggregation (CA) provided in each base station. The first base station 110-1 and the second base station 110-2 may transmit downlink traffic to the terminal 120 or receive uplink traffic from the terminal 120 as MN and SN, respectively.

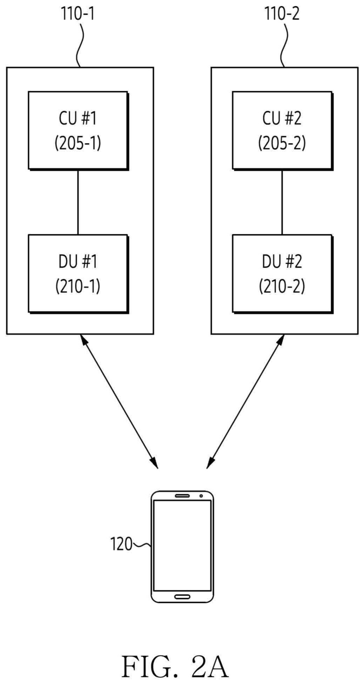

FIGS. 2A to 2C illustrate examples of a spectrum aggregation environment according to embodiments of the present disclosure. The spectrum aggregation refers to a wireless communication technology using a certain frequency interval in a frequency domain and another frequency interval different from the frequency interval together. The frequency interval may correspond to at least one of a resource block (RB), a bandwidth part (BWP), a bandwidth, a cell, a cell group, a frequency band, and/or a frequency range, according to the technology used. For example, the spectrum aggregation may include CA. The bandwidth of a primary cell (PCell) and the bandwidth of a secondary cell (SCell) may be used together for data communication. For example, the spectrum aggregation may include DC. A frequency domain occupied by a cell of the MCG of the MN and a frequency domain occupied by a cell of the SCG of the SN may be used together for communication. For example, the spectrum aggregation may include CoMP. Base stations having different frequency spectrums may be used for data communication. For example, the spectrum aggregation may include a multi (M)-transmission reception point (TRP). Resources allocated in different frequency domains may be used for data transmission.

A cell may refer to an area (or coverage) capable of being covered by one base station (e.g., gNB) (or one DU). The cell may indicate not only a geographical area but also an area occupying a specific spectrum in a frequency domain. The DU may cover one cell or may cover multiple cells. Here, the multiple cells may be distinguished by a frequency supported or an area of a sector covered. A serving cell, which provides higher-layer signaling (e.g., radio resource control (RRC) signaling) with a terminal, may refer to one cell or multiple cells. When the terminal 120 is not configured to support carrier aggregation (CA) and dual connectivity (DC), the serving cell may be one cell corresponding to a PCell. When the terminal 120 is configured to support CA or DC, the serving cell may be a set of cells including the PCell and one or more SCells.

Referring to FIG. 2A, a base station may be separated into a CU and a DU. For example, when the base station corresponds to a gNB, the CU is a logical node that hosts RRC, service data adaptation protocol (SDAP), and packet data convergence protocol (PDCP) of the base station. The CU and the DU may be connected through an F1 interface. The DU is a logical node that hosts a radio link control (RLC) layer, a medium access control (MAC) layer, and a physical (PHY) layer. The DU may support one or more cells, and a cell may be supported by only one DU. The first base station 110-1 may include a CU #1 205-1 and a DU #1 210-1. The DU #1 210-1 may provide one or more cells. The second base station 110-2 may include a CU #2 205-2 and a DU #2 210-2. The DU #2 210-2 may provide one or more cells. For example, for DC operation, an MgNB-DU may indicate a gNB-DU (e.g., the DU #1 210-1) of a gNB or an en-gNB acting as a master node, and an SgNB-DU may represent a gNB-DU (e.g., the DU #2 210-2) of a gNB or an en-gNB serving as a secondary node.

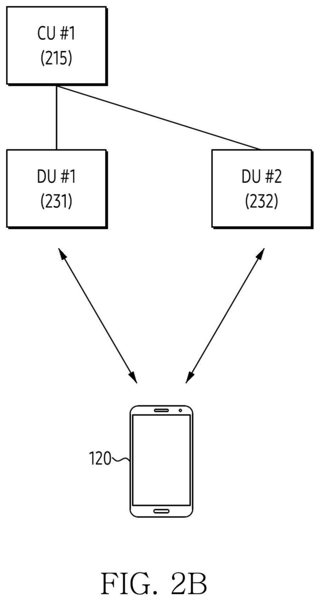

Referring to FIG. 2B, a base station may be separated into a CU and a DU. Unlike a case where multiple independent base stations (e.g., the first base station 110-1 and the second base station 110-2) serve the terminal 120, one CU and multiple DUs may serve the terminal 120. For example, the CU #1 215 may be connected to the DU #1 231 and the DU #2 232. The CU #1 215 may be connected to each of the DU #1 231 and the DU #2 232 through an F1 interface. The DU #1 231 may provide one or more cells. The DU #2 232 may provide one or more cells. For example, for CA operation, the DU #1 231 may provide a cell corresponding to a PCell. The DU #2 232 may provide a cell corresponding to an SCell. Two cells may be configured for the terminal 120.

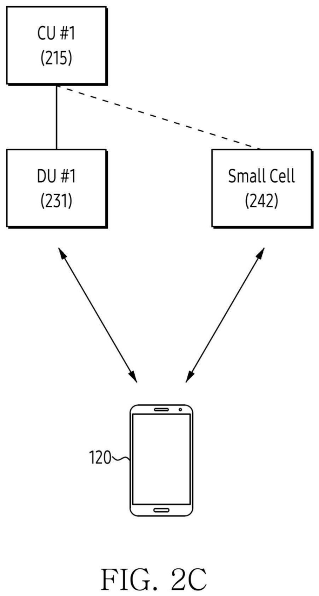

Referring to FIG. 2C, a base station may be separated into a CU and a DU. In addition to a distributed deployment separated into the CU and the DU, a base station 242 for small cells may additionally be deployed. For example, the CU #1 215 may be connected to the DU #1 231 through an F1 interface. The base station 242, as an independent base station, may perform communication with the CU #1 215. The DU #1 231 may provide one or more cells. The base station 242 may provide one or more small cells. For example, for CA operation, the DU #1 231 may provide a cell corresponding to a PCell. The DU #2 232 may provide a cell corresponding to an SCell. Two cells may be configured for the terminal 120.

Vendors of the DUs (or the DU and a base station of the small cell) may be different from each other. Frequency intervals used among multi-vendors may not satisfy compatibility with each other. For example, a vendor of a first DU and a vendor of a second DU may have purchased different frequency bands from each other. A frequency domain occupied by a cell provided by the first DU may be different from a frequency domain occupied by a cell provided by the second DU. Since the second DU cannot accurately know information regarding the cell of the first DU, it may be difficult to configure CA between the two cells. If CA of the two cells is configured, signaling through a CU or a higher entity is required because there is no interface between the first DU and the second DU. However, an increase in signaling causes delay, and thus efficient resource management may be difficult.

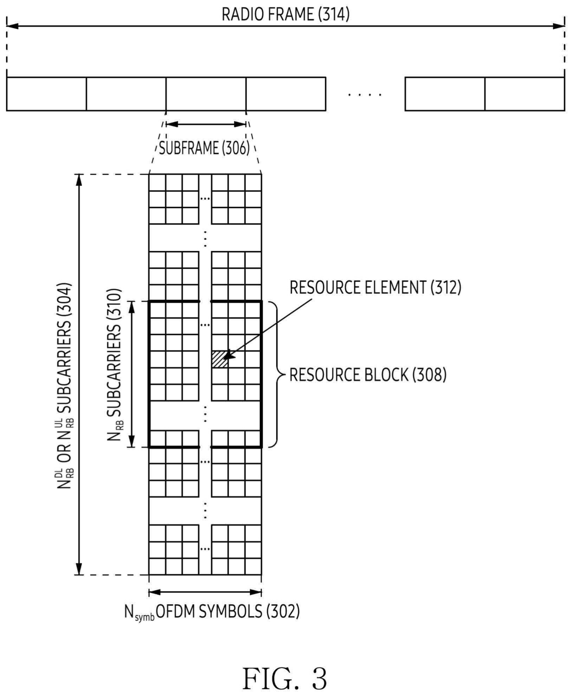

Hereinafter, embodiments of the present disclosure describe new interfaces and procedures and messages for configuring the interfaces for spectrum aggregation, such as the CA or the DC described above. First, resources in a physical layer are described with reference to FIG. 3.

FIG. 3 illustrates an example of a resource structure in a time domain and a frequency domain according to embodiments of the present disclosure. FIG. 3 illustrates a basic structure of a time-frequency domain, which is a radio resource domain in which data or a control channel is transmitted in downlink or uplink.

Referring to FIG. 3, a horizontal axis indicates the time domain and a vertical axis indicates the frequency domain. A minimum transmission unit in the time domain is an orthogonal frequency division multiplexing (OFDM) symbol, and N_{symb} OFDM symbols 302 are gathered to form one slot 306. A length of a subframe is defined as 1.0 ms, and a length of a radio frame 314 is defined as 10 ms. A minimum transmission unit in the frequency domain is a subcarrier, and a carrier bandwidth configuring a resource grid may be configured with N_{BW} subcarriers 304.

A basic unit of a resource in the time-frequency domain is a resource element (hereinafter referred to as 'RE') 312, and may be indicated as an OFDM symbol index and a subcarrier index. A resource block may include a plurality of resource elements. In an LTE system, a resource block (RB) (or a physical resource block, hereinafter 'PRB') is defined as N_{symb} consecutive OFDM symbols in the time domain and N_{SC}^{RB} consecutive subcarriers in the frequency domain. In an NR system, a resource block (RB) 308 may be defined as N_{SC}^{RB} consecutive subcarriers 310 in the frequency domain. One RB 308 includes N_{SC}^{RB} REs 312 on a frequency axis. In general, a minimum unit of transmission of data is RB and the number of subcarriers is N_{SC}^{RB}=12. The frequency domain may include common resource blocks (CRB). A physical resource block (PRB) may be defined in a bandwidth part (BWP) on the frequency domain. The CRB and PRB numbers may be determined according to a subcarrier spacing. A data rate may increase in proportion to the number of RBs scheduled for a terminal.

In the NR system, a downlink transmission bandwidth and an uplink transmission bandwidth may be different in a case of a frequency division duplex (FDD) system that operates by dividing the downlink and the uplink by a frequency. A channel bandwidth indicates a radio frequency (RF) bandwidth corresponding to a system transmission bandwidth. Table 1 indicates a portion of a correspondence among a system transmission bandwidth, a subcarrier spacing (SCS) and a channel bandwidth defined in the NR system in a frequency band (e.g., a frequency range (FR) 1 (310 MHz to 7125 MHz)) lower than x GHz. Table 2 indicates a portion of a correspondence among a transmission bandwidth, a subcarrier spacing, and a channel bandwidth defined in the NR system in a frequency band (e.g., FR2 (24250 MHz - 52600 MHz) or FR2-2 (52600 MHz to 71,000 MHz)) higher than yGHz. For example, in an NR system having a channel bandwidth of 100 MHz with a subcarrier spacing of 30 kHz, a transmission bandwidth is configured with 273 RBs. In Table 1 and Table 2, N/A may be a bandwidth-subcarrier combination that is not supported in the NR system.

**[Table 1]**

| Channel bandwidth [MHz] | SCS | 5 | 10 | 20 | 50 | 80 | 100 |
|---|---|---|---|---|---|---|---|
| Transmission bandwidth configuration | 15kHz | 25 | 52 | 106 | 207 | N/A | N/A |
| | 30kHz | 11 | 24 | 51 | 133 | 217 | 273 |
| | 60kHz | N/A | 11 | 24 | 65 | 107 | 135 |
| N_{RB} | | | | | | | |

**[Table 2]**

| Channel bandwidth [MHz] | SCS | 50 | 100 | 200 | 400 |
|---|---|---|---|---|---|
| Transmission bandwidth configuration N_{RB} | 60kHz | 66 | 132 | 264 | N/A |
| | 120kHz | 32 | 66 | 132 | 264 |

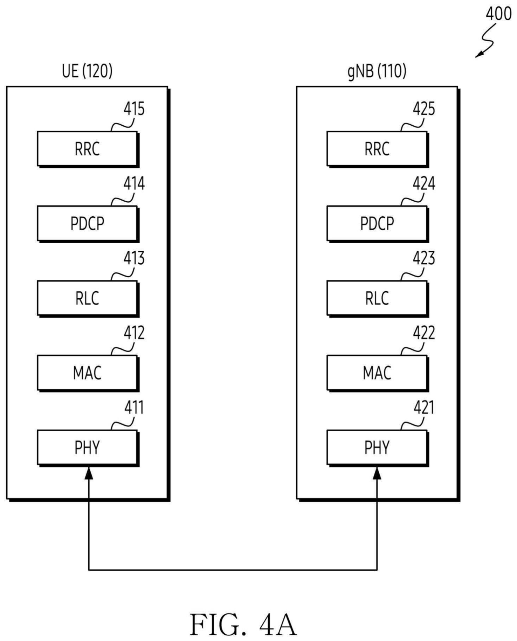

FIG. 4A illustrates a protocol stack 400 on a control plane according to embodiments of the present disclosure.

Referring to FIG. 4A, in an NR communication system, a radio protocol of a control plane of a terminal 120 (e.g., UE) may include PHY 411, MAC 412, RLC 413, PDCP 414, and RRC 415. In an NR communication system, a radio protocol of a control plane of a base station 110 (e.g., gNB) may include PHY 421, MAC 422, RLC 423, PDCP 424, and RRC 425.

A main functions of the RRC 415 or 425 may include a portion of the following functions.
- Broadcast system information related to Access Stratum (AS) and Non Access Stratum (NAS)
- Paging initiated by 5GC or NG-RAN
- Establishment, maintenance, and release of an RRC connection between UE and NG-RAN, including:
   1) Addition, modification, and release of carrier aggregation
   2) Addition, modification, and release of Dual Connectivity within NR or between E-UTRA and NR.
- Security functions including key management
- Establishment, configuration, maintenance, and release of Signaling Radio Bearer (SRB) and Data Radio Bearer (DRB)

A mobility function including:
1) Handover and context transfer
2) UE cell selection and reselection and control of cell selection and reselection
3) Inter-RAT mobility
   - Quality of Service (QoS) management function
   - UE measurement reporting and report control
   - Detection of and recovery from radio link failure
   - Transfer of NAS messages from and to NAS to and from UE

A main function of the PDCP 414 or 424 may include a portion of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above description, the reordering function of the PDCP layer may refer to a function of reordering PDCP PDUs received from a lower layer in order based on a PDCP sequence number (SN). The reordering function of the PDCP layer may include a function of delivering data to an upper layer in a reordered sequence, a function of delivering data without considering the order, a function of recording lost PDCP PDUs by reordering the order, a function of reporting a status of the lost PDCP PDUs to a transmitting side, and a function of requesting retransmission of the lost PDCP PDUs.

A main function of the RLC 413 or 423 may include a portion of the following functions.
- Transfer of upper layer PDUs
- In-sequence delivery of upper layer PDUs
- Out-of-sequence delivery of upper layer PDUs
- Error correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above description, the in-sequence delivery function of the RLC layer may refer to a function of delivering RLC SDUs received from a lower layer to an upper layer in order. In a case that one RLC SDU is segmented into multiple RLC SDUs and received, the in-sequence delivery function of the RLC layer may include a function of reassembling and delivering them.

The in-sequence delivery function of the RLC layer may include a function of reordering received RLC PDUs based on an RLC sequence number (SN) or a PDCP sequence number (SN), a function of recording lost RLC PDUs by reordering the order, a function of reporting a status of the lost RLC PDUs to a transmitting side, and a function of requesting retransmission of the lost RLC PDUs.

The in-sequence delivery function of the RLC layer may include, in a case that there is a lost RLC SDU, a function of delivering only RLC SDUs up to the RLC SDU prior to the lost RLC SDU to an upper layer in order. In addition, if a predetermined timer has expired even though there is a lost RLC SDU, the in-sequence delivery function of the RLC layer may include a function of delivering all RLC SDUs received before the predetermined timer is started to an upper layer in order. In addition, the in-sequence delivery function of the RLC layer may include, if a predetermined timer has expired even though there is a lost RLC SDU, a function of delivering all RLC SDUs received so far to an upper layer in order.

The RLC layer may process RLC PDUs in an order in which they are received, regardless of an order of sequence numbers (out-of-sequence delivery), deliver them to a PDCP 405 or 440 device.

In a case that the RLC layer receives a segment, it may receive segments that are stored in a buffer or to be received later, reconstruct them into a complete RLC PDU, and deliver it to a PDCP device.

The RLC layer may not include the concatenation function, and may perform the function in the MAC layer or replace it with a multiplexing function of the MAC layer.

In the above description, the out-of-sequence delivery function of the RLC layer may refer to a function of delivering RLC SDUs received from a lower layer to an upper layer immediately, regardless of an order. The out-of-sequence delivery function of the RLC layer may include, in a case that one RLC SDU is originally segmented into multiple RLC SDUs and received, a function of reassembling and delivering it. The out-of-sequence delivery function of the RLC layer may include a function of storing RLC SN or PDCP SN of the received RLC PDUs, ordering them, and recording lost RLC PDUs.

The MAC 412 or 422 may be connected to multiple RLC layers configured in one terminal, and a main function of the MAC may include a portion of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The PHY layer 411 or 421 may perform an operation of channel coding and modulation of higher-layer data, generating it as an OFDM symbol and transmitting it to a wireless channel, or an operation of demodulating the OFDM symbol received through the wireless channel, performing channel decoding, and delivering them to a higher layer.

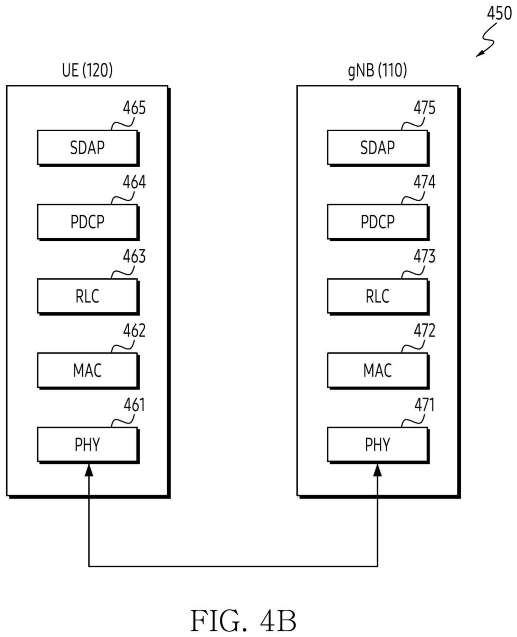

FIG. 4B illustrates a protocol stack 450 on a user plane according to embodiments of the present disclosure.

Referring to FIG. 4B, a radio protocol of a user plane of the terminal 120 (e.g., UE) may include PHY 461, MAC 462, RLC 463, PDCP 464, and SDAP 465. In the NR communication system, a radio protocol of a user plane of the base station 110 (e.g., gNB) may include PHY 471, MAC 472, RLC 473, PDCP 474, and SDAP 475.

A main function of the SDAP 465 or 475 may include a portion of the following functions.
- transfer of user plane data
- mapping between a QoS flow and a DRB for both DL and UL
- marking QoS flow ID in both DL and UL packets
- reflective QoS flow to DRB mapping for the UL SDAP PDUs

For the SDAP layer, the terminal 120 may be set whether to use a header of the SDAP layer or a function of the SDAP layer by a radio resource control (RRC) message for each PDCP layer, bearer, or logical channel. In a case that the SDAP header is set, the terminal 120 may indicate so that the terminal 120 update or reset mapping information between the QoS flow and the data bearer for uplink and downlink through a Non-Access Stratum (NAS) reflective Quality of Service (QoS) setting 1-bit indicator (NAS reflective QoS) and an Access Stratum (AS) reflective QoS setting 1-bit indicator (AS reflective QoS) of the SDAP header. The SDAP header may include QoS flow ID information indicating QoS. QoS information may be used as data processing priority, scheduling information, and the like, for supporting a smooth service.

For the PDCP 464 or 474 in the user plane, a description of the PDCP 414 or 424 in the control plane may be referred to. For the RLC 463 or 473 in the user plane, a description of the RLC 413 or 423 in the control plane may be referred to. For the MAC 462 or 472 in the user plane, a description of the MAC 412 or 422 in the control plane may be referred to. For the PHY 461 or 471 in the user plane, a description of the PHY 411 or 421 in the control plane may be referred to.

Although the radio protocol of the NR communication system in the radio access network has been described as an example, embodiments of the present disclosure are not limited thereto. For example, also in an LTE communication system, DU may be defined (e.g., eNB-DU), and in this case, the SDAP 465 or 475 may be omitted. Since embodiments of the present disclosure provide procedures for an interface between DUs or an interface between DU and a base station (e.g., eNB/gNB) for spectrum aggregation that may be applied in 4G, 5G, and/or 6G systems, various types of layers or protocols may be used in addition to the communication protocol of FIG. 4B.

Since the number of network entities increases as communication technology advances and performing communication with an external node (e.g., a base station, another DU) through the CU causes a delay, it is necessary to define the interface between DUs or the interface between the DU and the base station. Hereinafter, for spectrum aggregation, such as the CA described above, a new interface and procedures and messages for configuring the interface are proposed. Hereinafter, procedures and messages related to the interface between DUs are described, but it goes without saying that the same or similar methods may also be applied to an interface between the DU and an independent base station (e.g., a base station of a small cell). In the present disclosure, in describing the interface between DUs, the DUs may be of the same vendors or of different vendors. That is, information exchange may be performed between DUs of the different vendors through an interface and messages to be described below.

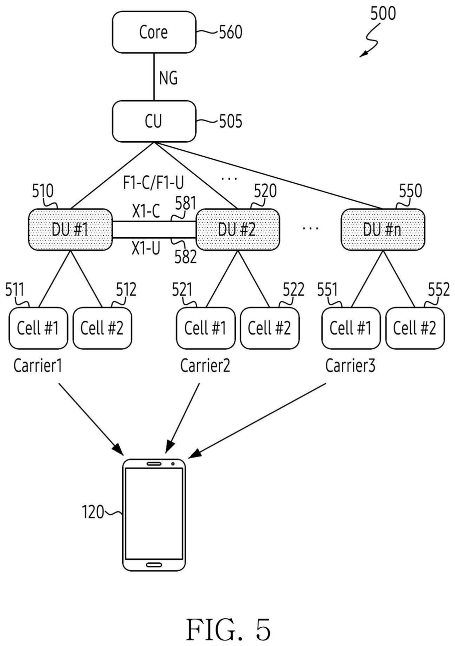

FIG. 5 illustrates an example of spectrum aggregation between distributed units (DUs) according to embodiments of the present disclosure.

Referring to FIG. 5, a communication network may include a radio access network 500 and a core network 560. A node (e.g., a base station 110) that provides the radio access network 500 may provide a user device (e.g., a terminal 120) with a communication service through one or more cells. The core network 560 may include various entities so that the communication service may be performed smoothly. For example, the core network 560 may include an entity in charge of an access management function (AMF). For example, the core network 560 may include an entity in charge of a user plane function (UPF). The core network 560 may be implemented through the radio access network 500 and an NG interface. The NG interface may include an NG-C interface for a control plane and an NG-U interface for a user plane. The NG-C interface may be defined between the node that provides the radio access network 500, and the AMF. The NG-U interface may be defined between the node that provides the radio access network 500 and the UPF.

The node that provides the radio access network 500 may be implemented as a distributed deployment according to a central unit (CU) 505 configured to perform a function of upper layers (e.g., PDCP, or RRC) of the access network, and a distributed unit (DU) configured to perform a function of lower layers (e.g., RLC, MAC, or PHY). An interface between the CU 505 and the DU may be referred to as an F1 interface. The F1 interface may include an F1-C interface for the control plane and an F1-U interface for the user plane. The CU 505 may be connected to one or more DUs. For example, the CU 505 may be connected to DU #1 510, DU #2 520, ..., and DU #n 550. Each DU may provide one or more cells. For example, the DU #1 510 may provide a cell #1 511 and a cell #2 512. The DU #2 520 may provide a cell #1 521 and a cell #2 522. The DU #n 550 may provide a cell #1 551 and a cell #2 552.

In Carrier Aggregation (CA), two or more cells may be aggregated. A cell may have a component carrier (CC). The terminal 120 may simultaneously receive or transmit signals through one or a plurality of CCs according to capability. When the CA is configured, the terminal 120 may have only one RRC connection with the network. In RRC connection establishment/re-establishment/handover, one serving cell provides NAS mobility information, and in RRC connection re-establishment/handover, one serving cell may provide a security input. The serving cell may be referred to as a primary cell (PCell). According to a UE capability of the terminal 120, a secondary cell (SCell) may be configured to form a serving cell set with the PCell. A serving cell set configured for the terminal 120 may be always configured with one PCell and one or more SCells. For example, the cell #1 511 of the DU #1 510 and the cell #1 521 of the DU #2 520 may be configured as a serving cell set for the terminal 120. In addition, for example, the cell #1 511 of the DU #1 510, the cell #1 521 of the DU #2 520, and the cell #1 551 of the DU #n 550 may be configured as a serving cell set for the terminal 120. In addition, for example, the cell #2 512 of the DU #1 510 and the cell #1 551 of the DU #n 550 may be configured as a serving cell set for the terminal 120.

Reconfiguration, addition, and removal of an SCell may be performed by RRC. During a handover in NR and during connection resumption from RRC_INACTIVE, the network may also add, remove, maintain, or reconfigure SCells to be used with a target PCell. When a new SCell is added, dedicated RRC signaling may be used to transmit all essential system information of the SCell.

In embodiments of the present disclosure, CA for the terminal 120 may be configured through a plurality of DUs. According to a network environment and availability of carriers, an operator may deploy DUs or DUs from multiple vendors across a plurality of sites. In order to support inter DU CA even when the DUs are not from the same vendor or are not in the same site, an interface between DUs may be defined. Hereinafter, the interface between DUs is referred to as an X1 interface, but the interface may alternatively be referred to by another term having the same technical meaning (e.g., M1, F3, MV, or XD). In the control plane, the interface between DUs may be referred to as an X1-C interface 581. In the user plane, the interface between DUs may be referred to as an X1-U interface 582. The X1-C interface 581 may be used to share call control information between DUs and for a setup procedure. The X1-U interface 582 may be used for inter DU CA bearer transmission, signaling between MAC layers, and information sharing.

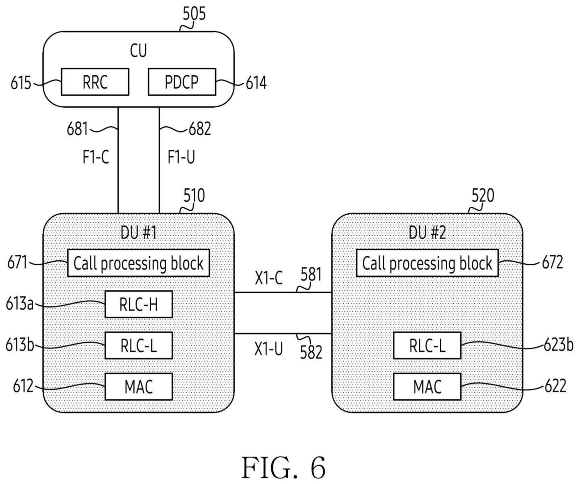

FIG. 6 illustrates an example of a control plane for spectrum aggregation between DUs according to embodiments of the present disclosure.

Referring to FIG. 6, CU 505 may perform functions of RRC 615 and functions of PDCP 614. The CU 505 may be connected to DU #1 510 through an F1 interface. The F1 interface may include an F1-C interface 681 for a control plane and an F1-U interface 682 for a user plane.

The DU #1 510 and DU #2 510 may be connected to each other through an X1 interface. The X1 interface may include an X1-C interface 581 for the control plane and an X1-U interface 582 for the user plane. The DU #1 510 may be a node that provides a PCell of CA. The DU #1 510 may include a MAC processing module 612, an RLC-H processing module 613a, an RLC-L processing module 613b, and a call processing block 671. The MAC processing module 612 may be configured to process functions of MAC 422 and MAC 472. The RLC-H processing module 613a and the RLC-L processing module 613b may be configured to process functions of RLC 424 and RLC 474. Among the functions of RLC 424 and RLC 474, functions requiring real-time processing (e.g., TTI-based functions) may be processed by the RLC-L processing module 613b, and other functions requiring non-real-time processing may be processed by the RLC-H processing module 613a. The call processing block 671 may be configured to process parameters (e.g., RRC IEs) received from the CU 505 or parameters received from the DU #2 520.

The DU #2 520 may be a node that provides an SCell of the CA. The DU #2 520 may include a MAC processing module 622, an RLC-L processing module 623b, and a call processing block 672. The MAC processing module 622 may be configured to process functions of the MAC 422 and the MAC 472. The RLC-L processing module 623b may be configured to process at least a portion of functions of the RLC 424 and the RLC 474. The call processing block 672 may be configured to process parameters received from the DU #1 520. Although not illustrated in FIG. 6, according to an embodiment, the DU #2 520 may have the F1 interface with the CU 505. In this case, the call processing block 672 of the DU #2 520 may be configured to process parameters (e.g., RRC IEs) received from the CU 505.

In order to configure inter DU CA according to embodiments of the present disclosure, various parameters may be provided through an interface between DUs. At least a portion of the parameters may be received from the CU 505 or may be generated inside the DU.

According to embodiments, parameters for identification information may be provided through the interface between DUs. For example, a cell identifier (ID), DU ID, and gNB ID, which are unique information of a base station, may be used to recognize a specific cell, DU, or gNB, respectively. For example, when connecting IP between DUs, fixed internal IP addressing, rather than Public IP, may be used. The fixed internal IP may be used to prevent IP conflicts. Alternatively, a unique key may be used when setting a fixed user-defined routing (UDR) port number. For convenience of ID management, a Node ID value may be used as a unique key in a specific region. For example, Site ID information, which is a unique key during inter-regional inter DU CA, may be used for a CA operation that distinguishes Intra-Site and Inter-Site.

According to embodiments, the parameters for address information may be provided through the interface between DUs. For CA communication between DUs, a source X1-C IP address of its own may be set in a source DU, and an IP address of another DU may also be set as a target X1-C IP address. For signaling and bearer communication for CA between DUs, the source DU may set source X1-U IP address of its own. The source DU may also set a target X1-U IP address for the IP address of the other DU.

According to embodiments, parameters related to a function may be provided through the interface between DUs. When transmitting a CA signaling packet through the X1-C interface 581 or transmitting a CA bearer packet through the X1-U interface 582, a Differentiated Services Code Point (DSCP) setting may be supported to ensure priority. When transmitting the CA signaling packet through the X1-C interface 581 or transmitting the CA bearer packet through the X1-U interface 582, a virtual local area network (VLAN) ID setting may be supported for path determination.

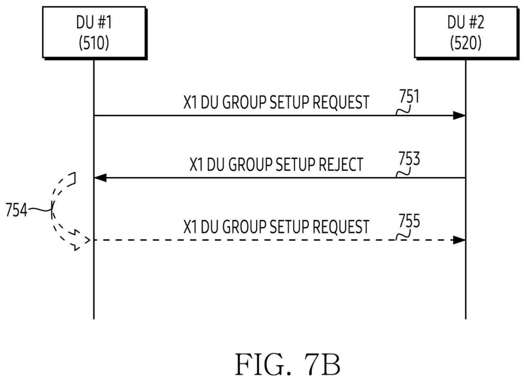

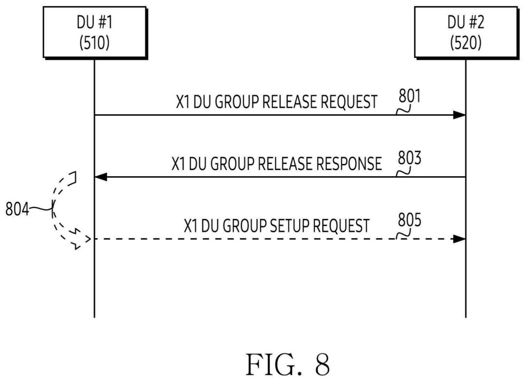

According to embodiments, a timer (e.g., a Setup Retry Timer) may be defined for a case in which a DU group setup fails or is released. When the timer expires, the DU may perform an attempt of the DU group setup again. A procedure related to the timer will be described with reference to FIGS. 7B and 8.

The above-described parameters may be defined as shown in a table below.

**[Table 3]**

| Parameter | Description |
|---|---|
| Cell ID | Unique ID information for a cell within DU |
| DU ID | Unique ID information for DU |
| gNB ID | Unique ID information for gNB (e.g., Global gNB ID) |
| Node ID | Unique ID information for gNB within a specific region (e.g., a Site indicated by the Site ID) |
| Site ID | Unique ID information for a Site where DU exists |
| Inter DU CA On/off | On/Off setting for Inter DU CA operation |
| Source X1-C IP address | IP address setting of this DU for transmitting and receiving Call procedure packets between DUs for Inter DU CA |
| Source X1-U IP address | IP address setting of this DU for transmitting and receiving CA bearer and signaling packets between DUs for Inter DU CA |
| Target X1-C IP address | **IP** address setting of another DU for transmitting and receiving Call procedure packets between DUs for Inter DU CA |
| Target X1-U IP address | IP address setting of another DU for transmitting and receiving CA bearer and signaling packets between DUs for Inter DU CA |
| SCTP STATUS | Information on a connection status when DU group setup is completed |
| CA Signaling DSCP ID | DSCP ID setting to be applied when transmitting CA signaling packets between DUs via an X1-U interface |
| CA Bearer DSCP ID | DSCP ID setting to be applied when transmitting CA bearer packets between DUs via an X1-U interface |
| CA Signaling VLAN ID | VLAN ID setting to be applied when transmitting CA signaling packets between DUs via an X1-U interface |
| CA Bearer VLAN ID | VLAN ID setting to be applied when transmitting CA bearer packets between DUs via an X1-U interface |
| Setup Retry Timer | Timer for waiting until re-performing a DU group setup procedure |

Meanwhile, the above-described parameters are exemplary, and for the CA between DUs according to embodiments of the present disclosure, the table is not used to restrictively interpret embodiments of the present disclosure. For example, a portion of the parameters may not be used in the interface between DUs. For example, the portion of the parameters may be internally set in the DU. For example, the portion of the parameters may have a fixed value.

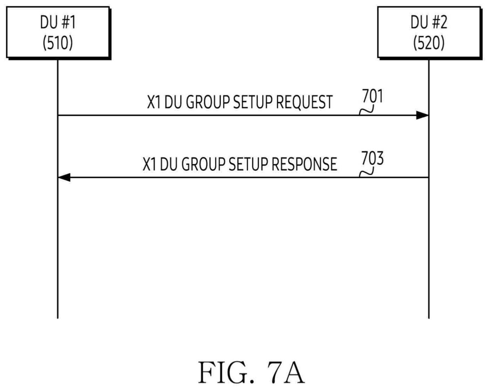

FIGS. 7A to 7B illustrate a DU group setup procedure according to embodiments of the present disclosure. The DU group setup procedure is a procedure for sharing and initial setup of necessary information between DUs for Inter DU CA.

Referring to FIG. 7A, in operation 701, DU #1 510 may transmit an X1 DU group setup request message to DU #2 520. According to an embodiment, in a case that specific information is set, the DU #1 510 may transmit the X1 DU group setup request message to the DU #2 520. For example, the specific information may be a value (e.g., On of Inter DU CA Flag) indicating the CA between DUs. For example, the specific information may include information on a counterpart DU (e.g., a target IP address). For example, the specific information may include DSCP or VLAN ID. According to an embodiment, in a case that the specific message is received, the DU #1 510 may transmit the X1 DU group setup request message to the DU #2 520. For example, the message may include an X1 DU group setup reject message of FIG. 7B or a DU group setup release message of FIG. 8. The DU #1 510 may transmit the X1 DU group setup request message when a specific time elapses after receiving the specific message.

The DU #1 510 may provide the DU #2 520 with attribute information of the DU #1 510. For example, the X1 DU group setup request message may include at least one of the following parameters.
- DU SW Version: indicates a software version of the DU #1 510.
- CA/DC Function on/off information (Inter DU CA On/Off Flag, EN-DC Usage flag, NR-DC Usage flag, SA Usage flag): indicates whether a specific function (e.g., CA function and/or DC function) is activated in the DU #1 510. To indicate the corresponding function, a 'flag' may be used. For example, in an SCell addition procedure of the CA between DUs, DU in which the CA function is deactivated may be excluded from a selection target. For example, in an SN addition procedure, when an SCell in SN is selected, DU in which the DC function is deactivated may be excluded from the selection target.
- Transport information (Source RLC IP address information for Inter DU CA, Source MAC IP address information for Inter DU CA)
- ID Information: Site ID, gNB ID, DU ID, Node ID, Cell ID: indicate a region ID where the DU #1 510 is positioned, a global gNB ID of the DU #1 510, an ID of the DU #1 510, and a cell ID provided by the DU #1 510.
- Served Cell information: Band, Bandwidth, subcarrier spacing (SCS), TDD ratio, Slice ID, PLMN, Symmetric/Asymmetric DSS: the TDD ratio may indicate a ratio of a UL resource to a DL resource of a TDD cell. For example, in the SCell addition procedure of the CA between DUs, an SCell having the same TDD ratio as a TDD ratio of a PCell or a ratio related to the TDD ratio of the PCell may be selected. The Slice ID may be used to identify a network slice. For example, in the SCell addition procedure of the CA between DUs, an SCell capable of supporting the network slice of the Slice ID of the PCell may be selected. The Symmetric DSS indicates a cell in which a center frequency/bandwidth of an LTE cell is identical to a center frequency/bandwidth of an NR cell, and the Asymmetric DSS indicates a cell of DSS that is not the Symmetric DSS.
- Cell Status information (Normal/Disabled)

In operation 703, the DU #2 520 may transmit an X1 DU group setup response message to the DU #1 510. When successfully receiving the X1 DU group setup request message of the DU #1 510, the DU #2 520 may transmit the X1 DU group setup response message in response to the X1 DU group setup request message.

The DU #2 520 may identify whether a package is compatible between the DU #1 510 and the DU #2 520 in order to determine whether the X1 DU group setup request message has been successfully received. For example, the DU #2 520 may identify whether the package is compatible through a software version of the DU #1 510. The DU #2 520 may check whether setting information on the DU #1 510 has been normally inputted. For example, the DU #2 520 may check whether the setting information on the DU #1 510 has been normally inputted through IP address information on the DU #1 510 and/or whether the CA function is activated. The DU #2 520 may identify that an X1 connection with the DU #1 510 is normal and that attribute information of the DU #1 510 is suitable for configuration of the CA between DUs with the DU #2 520. The DU #2 520 may continue the DU group setup procedure for the configuration of the CA between DUs.

The DU #2 520 may provide attribute information of the DU #2 520 to the DU #1 510. For example, the X1 DU group setup response message may include at least one of the following parameters.
- DU SW Version: indicates a software version of the DU #2 520.
- CA/DC Function on/off information (Inter DU CA On/Off Flag, EN-DC Usage flag, NR-DC Usage flag, SA Usage flag): indicates whether a specific function (e.g., CA function and/or DC function) is activated in the DU #2 520. To indicate the corresponding function, a 'flag' may be used. For example, in an SCell addition procedure of the CA between DUs, DU in which the CA function is deactivated may be excluded from a selection target. For example, in an SN addition procedure, when an SCell in SN is selected, DU in which the DC function is deactivated may be excluded from the selection target.
- Transport information (Source RLC IP address information for Inter DU CA, Source MAC IP address information for Inter DU CA)
- ID Information: Site ID, gNB ID, DU ID, Node ID, Cell ID: indicate a region ID where the DU #2 520 is positioned, a global gNB ID of the DU #2 520, an ID of the DU #2 520, and a cell ID provided by the DU #2 520.
- Served Cell information: Band, Bandwidth, subcarrier spacing (SCS), TDD ratio, Slice ID, PLMN, Symmetric/Asymmetric DSS: the TDD ratio may indicate a ratio of a UL resource to a DL resource of a TDD cell. For example, in the SCell addition procedure of the CA between DUs, an SCell having the same TDD ratio as a TDD ratio of a PCell or a ratio related to the TDD ratio of the PCell may be selected. The Slice ID may be used to identify a network slice. For example, in the SCell addition procedure of the CA between DUs, an SCell capable of supporting the network slice of the Slice ID of the PCell may be selected. The Symmetric DSS indicates a cell in which a center frequency/bandwidth of an LTE cell is identical to a center frequency/bandwidth of an NR cell, and the Asymmetric DSS indicates a cell of DSS that is not the Symmetric DSS.
- Cell Status information (Normal/Disabled)

Although FIG. 7A describes a case in which the DU group setup request message has been successfully processed, the DU group setup request message may not be successfully processed. Hereinafter, a procedure for a situation in which the DU group setup request message is unsuccessfully processed will be described with reference to FIG. 7B.

Referring to FIG. 7B, in operation 751, the DU #1 510 may transmit an X1 DU group setup request message to the DU #2 520. For the operation 751, a description of the operation 701 may be referred to.

In operation 753, the DU #2 520 may transmit an X1 DU group setup reject message to the DU #1 510. For example, in a case that a software version of the DU #1 510 is different from a software version of the DU #2 520, the DU #2 520 may determine to reject the X1 DU group setup request message. For another example, in a case that address information provided from the DU #1 510 is different from address information identified in the DU #2 520, the DU #2 520 may determine to reject the X1 DU group setup request message. For another example, in a case that a function requested by the DU #1 510 is not supported by the DU #2 520, the DU #2 520 may determine to reject the X1 DU group setup request message. For example, the X1 DU group setup reject message may include cause information. The cause information may indicate a cause for rejection. As an example, the cause information may indicate that the software version is not compatible ('SW Version is not compatible'). As an example, the cause information may indicate that a configuration between the DU #1 510 and the DU #2 520 does not match ('Configuration mismatch').

After a designated time 754 elapses, in operation 755, the DU #1 510 may transmit the X1 DU GROUP setup request message back to the DU #2 520. For example, a length of the designated time 754 may be a fixed value. For another example, the length of the designated time 754 may be set from the DU #2 510. For example, a timer corresponding to the length of the designated time 754 may be set by a message (e.g., the DU group setup reject message) of the DU #2 520.

Meanwhile, unlike FIG. 7B, according to another embodiment, the DU #1 510 receiving the X1 DU group setup reject message may not perform a retry of the DU group setup. For example, in a case that the cause information indicates 'SW Version is not compatible', the DU #1 510 may not perform the retry of DU group setup. The DU #1 510 may wait until it receives the X1 DU group setup request message from the DU #2 520 after being upgraded to a software package version compatible with the DU #2 520.

In the DU group setup procedure described through FIGS. 7A to 7B, parameters related to version information, identification information, address information, and specific functions may be shared between DUs (e.g., the DU #1 510 and the DU #2 520). Through the shared information, whether the CA between DUs is performed may be determined. Hereinafter, in the present disclosure, the DU group setup may be referred to as "setup" for convenience of description. As an example, the DU setup request message may be referred to as a setup request message, and the DU setup response message may be referred to as a setup response message.

According to an embodiment, whether the CA between DUs is performed may be determined through whether a function is activated. For example, assuming a situation in which NR-CA is performed in EN-DC, NR-DC, or SA through sharing and On/off checking of an EN-DC Usage flag, an NR-DC Usage flag, and an SA Usage flag. The DU #1 510 may support CA in the EN-DC, the NR-DC, and the SA. In a case that a corresponding flag (e.g., the EN-DC Usage flag, the NR-DC Usage flag, or the SA Usage flag) of the DU #2 520 is On, the DU #1 510 may perform Inter DU CA between DUs. In a case that the corresponding flag of the DU #2 520 is Off, the DU #1 510 may not perform Inter DU CA between DUs. For example, in a situation where an SCell is to be added for EN-DC UE, in a case that the EN-DC Usage flag of the DU #2 520 indicates Off, the DU #1 510 may not perform the CA between DUs with the DU #2 520.

In a case the CA between DUs is performed, through sharing an IP address for CA bearer and for signaling of each DU, the DU #1 510 may establish an X1-U connection with the DU #2 520 when performing a UE context management procedure. In addition, the DU #1 510 may transmit and receive packets to and from the DU #2 520 through the CA bearer.

In order to configure the CA between DUs, serving cell information shared between DUs may be used. Through sharing of the serving cell information of each DU, a band, a bandwidth, or SCS of a counterpart DU may be identified. In the UE context management procedure, the DU may perform selection of a band combination and a feature set based on serving cell information of the counterpart DU. According to an embodiment, through sharing of the serving cell information, the DU #1 510 may obtain serving cell information of the DU #2 520. The DU #1 510 may check a TDD ratio of a cell of the DU #2 520. Based on a result of checking the TDD ratio, the DU #1 510 may configure the CA between DUs only for a TDD CA combination that is supportable when performing the UE context management procedure. According to an embodiment, through sharing of the serving cell information, the DU #1 510 may identify a Slice ID of the DU #2 520. Based on the Slice ID, the DU #1 510 may configure the CA between DUs only for a network slice that is supportable when performing the UE context management procedure. According to an embodiment, through sharing of the serving cell information, the DU #1 510 may identify a Public Land Mobile Network selection (PLMN) of the DU #2 520. Based on the PLMN, the DU #1 510 may configure the CA between DUs only for PLMN that is supportable when performing the UE context management procedure. According to an embodiment, through sharing of the serving cell information, the DU #1 510 may identify DSS cell information of the DU #2 520. For example, the DSS cell information may indicate whether the corresponding cell provides Symmetric DSS or Asymmetric DSS. Based on the DSS cell information, the DU #1 510 may configure the CA between DUs only for a DSS cell that is supportable when performing the UE context management procedure. According to an embodiment, through sharing of the serving cell information, the DU #1 510 may identify cell status information (Normal/Disabled) of the DU #2 520. Based on the cell status information, the DU #1 510 may configure the CA between DUs only for a cell in a normal status (that is, a cell that is not deactivated) when performing the UE context management procedure.

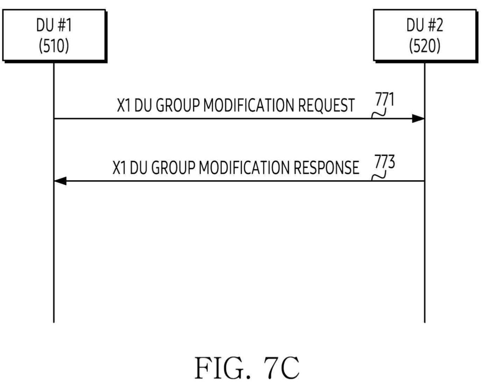

FIG. 7C illustrates a DU group modification procedure according to embodiments of the present disclosure. In the DU group setup procedure described through FIGS. 7A to 7B, in a case that modification of a portion of information is required or additional configuration is needed, the DU group modification procedure may be used. The procedure may be used to modify and set up necessary information between DUs.

Referring to FIG. 7C, in operation 771, the DU #1 510 may transmit an X1 DU group modification request message to the DU #2 520. When a change of at least one of the parameters set through the DU group setup procedure is required, the DU #1 510 may transmit the X1 DU group setup request message to the DU #2 520.

The DU #1 510 may provide the DU #2 520 with attribute information required to change the DU #1 510. For example, the X1 DU group modification request message may include at least one of the following parameters. For description of each parameter, the description of FIGS. 7A to 7B may be referred to.
- DU SW Version, Inter DU CA On/off Flag, EN-DC Usage flag, NR-DC Usage flag, SA Usage flag
- Source RLC IP Address Information for Inter DU CA
- Source MAC IP Address Information for Inter DU CA
- ID Information: Site ID, gNB ID, DU ID, Node ID, Cell ID,
- Served Cell information: Band, Bandwidth, SCS, TDD Ratio, Slice ID, PLMN, Sym/Asymmetric DSS
- Cell Status information (Normal/Disabled)

In operation 773, the DU #2 520 may transmit an X1 DU group modification response message to the DU #1 510. When the DU #1 510 successfully receives the X1 DU group modification request message, the DU #2 520 may transmit the X1 DU group modification response message in response to the X1 DU group modification request message.

The DU #2 520 may identify whether a package is compatible between the DU #1 510 and the DU #2 520 in order to determine whether the X1 DU group modification request message has been successfully received. For example, the DU #2 520 may identify whether the package is compatible through a software version of the DU #1 510. The DU #2 520 may check whether setting information on the DU #1 510 has been normally inputted. The DU #2 520 may identify whether changed information of the DU #1 510 is normally acceptable by the DU #2 520. When the DU #2 520 determines that the changed information of the DU #1 510 is acceptable, it may continue the DU group modification procedure to configure CA between DUs.

The DU #2 520 may provide the DU #1 510 with information necessary to change the DU #2 520. For example, the X1 DU group modification response message may include at least one of the following parameters. For description of each parameter, a description of FIGS. 7A to 7B may be referred to.
- DU SW Version, Inter DU CA On/off Flag, EN-DC Usage flag, NR-DC Usage flag, SA Usage flag
- Source RLC IP Address Information for Inter DU CA
- Source MAC IP Address Information for Inter DU CA
- ID Information: Site ID, gNB ID, DU ID, Node ID, Cell ID,
- Served Cell information: Band, Bandwidth, SCS, TDD Ratio, Slice ID, PLMN, Sym/Asymmetric DSS
- Cell Status information (Normal/Disabled)

If there is no parameter required to be changed in the DU #2 520, the above-described parameters may be omitted from the message.

Through the DU group modification procedure of FIG. 7C, parameters related to version information, identification information, address information, and specific functions, which require a change, may be shared between DUs (e.g., the DU #1 510 and the DU #2 520). Through the shared information, whether the CA between DUs is performed may be determined.

According to an embodiment, through whether a function is activated, whether the CA between DUs is performed may be determined. For example, assuming a situation in which NR-CA is performed in EN-DC, NR-DC, or SA through sharing and On/off checking of an EN-DC Usage flag, an NR-DC Usage flag, and an SA Usage flag. The DU #1 510 may support CA in the EN-DC, the NR-DC, and the SA. In a case that a corresponding flag (e.g., the EN-DC Usage flag, the NR-DC Usage flag, or the SA Usage flag) of the DU #2 520 is On, the DU #1 510 may perform Inter DU CA between DUs. In a case that a changed flag of the DU #2 520 is Off, the DU #1 510 may not perform the Inter DU CA between DUs. For example, in a situation where an SCell is to be added for EN-DC UE, in a case that the EN-DC Usage flag of the DU #2 520 indicates Off, the DU #1 510 may not perform the CA between DUs with the DU #2 520.

In a case the CA between DUs is performed, through sharing an IP address for CA bearer and for signaling of each DU, the DU #1 510 may establish the X1-U connection with the DU #2 520 when performing the UE context management procedure. In addition, the DU #1 510 may transmit and receive packets to and from the DU #2 520 through the CA bearer.

In order to configure the CA between DUs, changed serving cell information may be used. Through sharing of the changed serving cell information, a band, a bandwidth, or SCS of a counterpart DU may be identified. In the UE context management procedure, the DU may perform selection of a band combination and a feature set based on the changed serving cell information of the counterpart DU. According to an embodiment, through sharing of the serving cell information, the DU #1 510 may obtain the changed serving cell information of the DU #2 520. The DU #1 510 may identify a TDD ratio of a cell of the DU #2 520. Based on a result of checking the TDD ratio, the DU #1 510 may configure the CA between DUs only for a TDD CA combination that is be supportable when performing the UE context management procedure. According to an embodiment, through sharing of the serving cell information, the DU #1 510 may identify a changed slice ID of the DU #2 520. Based on the changed slice ID, the DU #1 510 may configure the CA between DUs only for a network slice that is supportable when performing the UE context management procedure. According to an embodiment, through sharing of the serving cell information, the DU #1 510 may identify a changed Public Land Mobile Network selection (PLMN) of the DU #2 520. Based on the changed PLMN, the DU #1 510 may configure the CA between DUs only for the PLMN that is supportable when performing the UE context management procedure. According to an embodiment, through sharing of the serving cell information, the DU #1 510 may identify changed DSS cell information of the DU #2 520. For example, the changed DSS cell information may indicate whether the corresponding cell provides Symmetric DSS or Asymmetric DSS. Based on the changed DSS cell information, the DU #1 510 may configure the CA between DUs only for a DSS cell that is supportable when performing the UE context management procedure. According to an embodiment, through sharing of the changed serving cell information, the DU #1 510 may identify changed cell status information (Normal/Disabled) of the DU #2 520. Based on the changed cell status information, the DU #1 510 may configure the CA between DUs only for a cell in a normal status (i.e., a cell that is not deactivated) when performing the UE context management procedure.

In FIG. 7C, only a successful case for the DU group modification request is illustrated, but embodiments of the present disclosure are not limited thereto. A rejection of the DU group modification request may also be included in embodiments of the present disclosure. According to one embodiment, unlike FIG. 7C, the DU #2 520 may transmit the DU group modification reject message to the DU #1 510 in response to the DU group modification request message. For example, when a software version of the DU #1 510 is different from a software version of the DU #2 520, the DU #2 520 may determine to reject the X1 DU group modification request message. For another example, in a case that address information provided from the DU #1 510 is different from address information identified at the DU #2 520, the DU #2 520 may determine to reject the X1 DU group modification request message. For another example, in a case that the changed function from the DU #1 510 is not supported by the DU #2 520, the DU #2 520 may determine to reject the X1 DU group modification request message. For example, the X1 DU group modification reject message may include cause information. The cause information may indicate a reason for the rejection. As an example, the cause information may indicate that the software version is not compatible ('SW Version is not compatible'). As an example, the cause information may indicate that a configuration between the DU #1 510 and the DU #2 520 does not match ('Configuration mismatch'). Subsequently, the DU #1 510 may, in response to the DU group modification reject message, transmit the DU group modification request message again or transmit a DU group release request message of FIG. 8 after a specific time elapses.

FIG. 8 illustrates a DU group release procedure according to embodiments of the present disclosure. The DU group release procedure is performed through an X1 interface and may be used to release a DU group that has been set up through a DU group setup procedure.

Referring to FIG. 8, in operation 801, DU #1 510 may transmit an X1 DU group release request message to DU #2 520. The X1 DU group release request message may include cause information. The cause information may indicate a cause for release. The DU #1 510 may transmit the X1 DU group release request message when a designated condition is satisfied. For example, in a case that an "Inter DU CA Flag" of the DU #1 510 and/or the DU #2 520 is Off, the DU #1 510 may transmit the X1 DU group release request message to the DU #2 520. Also, for example, in a case that the DU #1 510 and/or the DU #2 520 is in a shutdown status or a lock status, the DU #1 510 may transmit the X1 DU group release request message to the DU #2 520. Also, for example, in a case that the DU #1 510 receives a DU group modification reject message (e.g., the DU group modification reject message of FIG. 7C) from the DU #2 520, the DU #1 510 may transmit the X1 DU group release request message to the DU #2 520. Also, for example, in a case that an IP address for CA bearer and for signaling is changed, and it is determined that it is difficult to maintain the changed IP address for a terminal for which existing CA between DUs has been configured, the DU #1 510 may transmit the X1 DU group release request message to the DU #2 520.

In operation 803, the DU #2 520 may transmit an X1 DU group release response message to the DU #1 510. Based on the X1 DU group release response message, the DU #1 510 may identify that a DU group configured for the CA between DUs between the DU #1 510 and the DU #2 520 is released. In a case that the DU group including the DU #1 510 and the DU #2 520 is released, the CA between DUs using both the DU #1 510 and the DU #2 520 may not be allowed. CU 505, the DU #1 510, and/or the DU #2 520 may perform a UE context management procedure with a terminal 120 (e.g., UE) for which the CA between DUs has been configured. Through the UE context management procedure, a CA configuration for the terminal 120 may be changed or released.

After a designated time 804 elapse, in operation 805, the DU #1 510 may transmit an X1 DU group setup request message to the DU #2 520. For example, a length of the designated time 804 may be a fixed value. For another example, the length of the designated time 804 may be set from the DU #2 520. For example, a timer corresponding to the length of the designated time 804 may be set by a message (e.g., the DU group release response message) of the DU #2 520. The timer may also be shared with the DU #1 510 through a message (e.g., the DU group release request message).

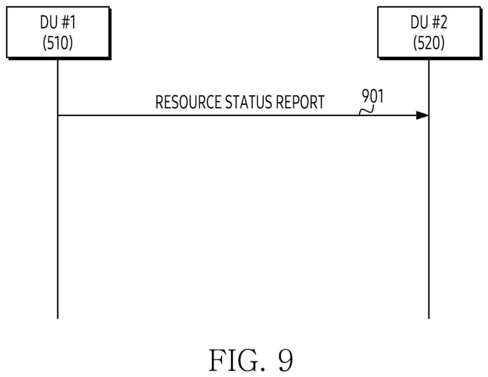

FIG. 9 illustrates a resource status report procedure according to embodiments of the present disclosure. The resource status report procedure may be provided through an X1-X interface 581. It may be used to share resource information necessary for CA between DUs.

Referring to FIG. 9, in operation 901, DU #1 510 may transmit a resource status report message to DU #2 520. The resource status report message may be used to provide information that needs to be updated or changed more frequently than in a DU group setup procedure or a DU group modification procedure. Although FIG. 9 describes a situation in which the DU #1 510 transmits the resource status report message to the DU #2 520, embodiments of the present disclosure are not limited thereto. The DU #2 520 may also transmit the resource status report message to the DU #1 510. For example, the resource status report message may include the following information (e.g., information elements (IEs)).
- PRB usage information for each cell
- Number of UEs for each cell
- PRB usage information for each cell and for each slice
- Number of UEs for each cell and for each slice

According to an embodiment, the resource status report procedure may be triggered based on various conditions. For example, in a case that an initial DU GROUP setup procedure has been normally completed, the resource status report procedure may be performed. The resource status report message may be periodically transmitted or transmitted when a specific event is detected.

According to an embodiment, information provided through the resource status report message may be used for a band combination and SCell selection. For example, the DU #1 510 may perform a band combination and the SCell selection based on the resource status report message received from the DU #2 520. The DU #1 510 may perform the band combination and the SCell selection with high throughput expected in the CA between DUs based on information on PRB usage and the number of UEs of the DU #2 520. The DU #1 510 may perform the band combination and the SCell selection by using information on PRB usage and the number of UEs of the DU #1 510 as well as the information on the PRB usage and the number of UEs of the DU #2 520. In addition, DU #1 510 may perform the band combination and the SCell selection with high throughput expected for each slice in the CA between DUs, based on information on PRB usage and the number of UEs for each slice of the DU #2 520. The DU #1 510 may perform the band combination and the SCell selection by using information on PRB usage and the number of UEs for each slice of the DU #1 510 as well as the information on the PRB usage and the number of UEs for each slice of the DU #2 520.

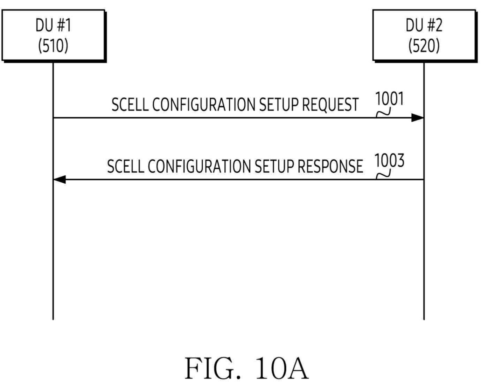

A procedure for setting up, modifying, and releasing a DU group for the CA between DUs has been described with reference to FIGS. 7A to 9. In order to configure the CA between DUs to UE, the UE context management procedure may be performed. Hereinafter, the UE context management procedure using an interface between DUs will be described with reference to FIGS. 10A to 14. When the CA between DUs for the terminal 120 is performed, DU providing a PCell may be referred to as PCell-DU, and DU providing an SCell may be referred to as SCell-DU. Each DU may provide a plurality of cells, and the SCell may also be configured with a plurality. For example, two or more SCells may be configured in the SCell-DU, and another cell in the PCell-DU may also be operated as the SCell.

FIG. 10A illustrates a secondary cell (SCell) configuration setup procedure according to embodiments of the present disclosure. The SCell configuration setup procedure may be performed through an X1-C interface 581. The procedure may be used to set up an SCell configuration in CA between DUs.

Referring to FIG. 10A, in operation 1001, DU #1 510 may transmit an SCELL configuration setup request message to DU #2 520. For example, the SCell configuration setup request message may include the following information.
- Transport information (X1-U Source IP address): for example, indicates an IP address of the DU #1 510.
- Selected SpCell ID, Selected SCell List: the special cell (SpCell) includes a PCell and/or a primary secondary cell (PSCell). The information may include a list of SCells for an SCell setup request and information on a PCell (e.g., ID of a PCell of the DU #1 510).
- Bearer information (QCI(QoS class identifier)/5QI(5G QoS identifier) ID, PDCP/RLC/MAC configuration)
- Selected BC/feature set information: Band combination and feature set information. A feature set supported for each block of an adjacent serving cell in a band may be referred to as a feature set (FS). A two-dimensional matrix of feature sets for all bands in a band combination (i.e., all feature sets per band) may be referred to as a feature set combination. In the feature set combination, the number of feature sets per band is equal to the number of band items in the corresponding band combination, and all feature sets per band may have the same number of feature sets. Each band combination may be connected to one feature set combination.
- C-RNTI(cell-radio network temporary identity) information
- MRDC(multi-RAT(radio access technology)) DC)/NR/LTE UE Capability information

In operation 1003, the DU #2 520 may transmit an SCELL configuration setup request message to the DU #1 510. For example, the SCell configuration setup response message may include the following information.
- Transport information (X1-U Target IP address): for example, indicates an IP address of the DU #2 520.
- Failed SCell List, Fail Cause: indicates a list of SCells for which the SCell configuration setup has failed. The information may include information on a cause of the failure.
- SCell Configuration

Although not illustrated in FIG. 10A, the DU #2 520 may transmit an SCell configuration setup failure message (or an SCell configuration setup reject message) to the DU #1 510. In a case that a setup of SCells requested by the DU #1 510 has all failed, the DU #2 520 may transmit the SCell configuration setup failure message to the DU #1 510. The SCell configuration setup failure message may include information on a cause of the failure. The DU #1 510 may not perform CA using the SCell of the DU #2 520 for a related terminal.

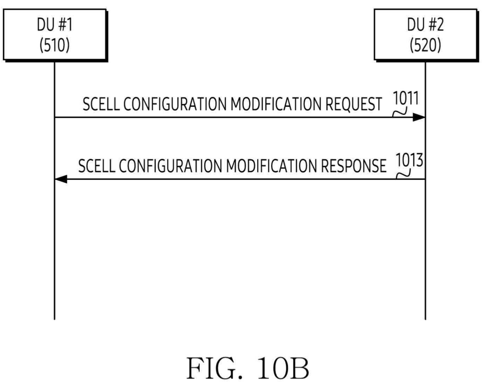

FIG. 10B illustrates an SCell configuration modification request procedure according to embodiments of the present disclosure. The SCell configuration modification request procedure may be performed through the X1-C interface 581. The procedure may be used to modify an SCell configuration in CA between DUs. In FIG. 10B, the SCell configuration modification procedure may be triggered by the DU #1 510. For example, the DU #1 510, which is DU providing a PCell, may be referred to as PCell DU. The DU #2 520, which is DU providing only an SCell, may be referred to as SCell DU.

Referring to FIG. 10B, in operation 1011, the DU #1 510 may transmit an SCELL configuration modification request message to the DU #2 520. For example, the SCell configuration modification request message may include the following information. For description of each parameter, FIG. 10A may be referred to.
- Transport information (X1-U Source IP address)
- Selected SPcell ID, Selected SCell List
- Bearer information (QCI/5QI ID, PDCP/RLC/MAC configuration)
- Selected BC/featureset information.
- C-RNTI information
- MRDC/NR/LTE UE Capability information

In operation 1013, the DU #2 520 may transmit an SCELL configuration modification response message to the DU #1 510. For example, the SCell configuration modification response message may include the following information. For description of each parameter, FIG. 10A may be referred to.
- Transport information (X1-U Target IP address)
- Failed SCell List, Fail Cause
- SCell Configuration

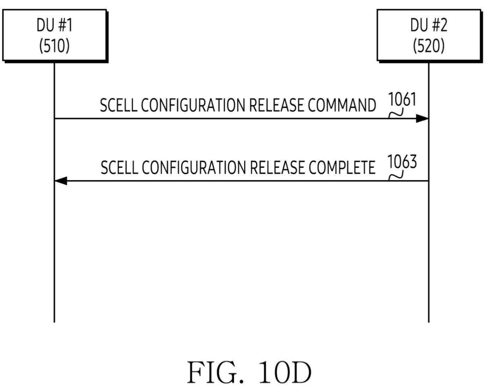

Although not illustrated in FIG. 10B, the DU #2 520 may transmit an SCell configuration modification failure message to the DU #1 510. In a case that modifications of SCell(s) requested by the DU #1 510 have all failed, the DU #2 520 may transmit the SCell configuration modification failure message to the DU #1 510. The SCell configuration modification failure message may include information on a cause of the failure. According to an embodiment, when the SCell configuration modification failure message is received, the DU #1 510 may perform an SCell configuration release procedure. A procedure of FIG. 10D may be used for the SCell configuration release procedure. For example, when it is determined that it is difficult to maintain an existing setting with UE, the DU #1 510 may transmit an SCell configuration release request message to the DU #2 520.

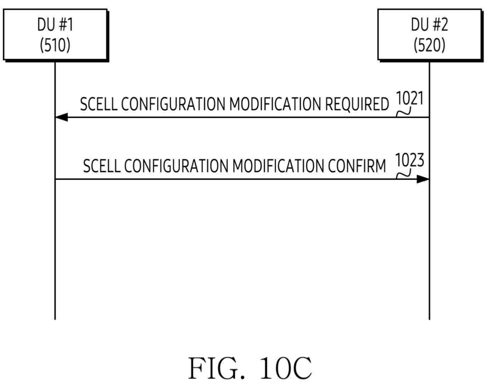

FIG. 10C illustrates an SCell configuration modification required procedure according to embodiments of the present disclosure. The SCell configuration modification request procedure may be performed through the X1-C interface 581. The procedure may be used to modify an SCell configuration in CA between DUs. Unlike FIG. 10B, the SCell configuration modification procedure may be triggered first by the DU #2 520 instead of the DU #1 510. For example, the DU #1 510, which is DU providing a PCell, may be referred to as PCell DU. The DU #2 520, which is DU providing only an SCell, may be referred to as SCell DU.

Referring to FIG. 10C, in operation 1021, the DU #2 520 may transmit an SCELL configuration modification required message to the DU #1 510. For example, the SCell configuration modification required message may include the following information. For description of each parameter, FIG. 10A may be referred to.
- Transport information (X1-U Target IP address)
- Failed SCell List, Fail Cause
- SCell Configuration

In operation 1023, the DU #1 510 may transmit an SCell configuration modification confirmation message to the DU #2 520. For example, the SCell configuration modification confirm message may include the following information. For description of each parameter, FIG. 10A may be referred to.
- Transport information (X1-U Source IP address)
- Selected SpCell ID, Selected SCell List
- Bearer information (QCI/5QI ID, PDCP/RLC/MAC configuration)
- Selected BC/featureset information.
- C-RNTI information
- MRDC/NR/LTE UE Capability information

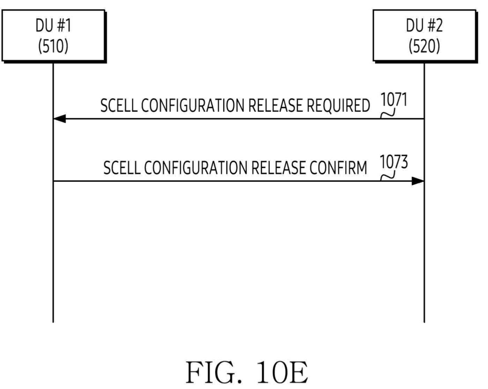

Although not illustrated in FIG. 10C, the DU #1 510 may transmit an SCell configuration modification reject message to the DU #2 520. In a case that modification of a configuration of SCell(s) required by the DU #2 520 is not accepted, the DU #1 510 may transmit the SCell configuration modification reject message to the DU #2 520. The SCell configuration modification reject message may include information on a cause of the failure. According to an embodiment, when the SCell configuration modification reject message is received, the DU #2 520 may perform an SCell configuration release required procedure. The procedure of FIG. 10E may be used for the SCell configuration release procedure. For example, when it is determined that it is difficult to maintain the existing configuration with the UE, the DU #2 520 may transmit an SCell configuration release required message to the DU #1 510.

FIG. 10D illustrates an SCell configuration release procedure according to embodiments of the present disclosure. The SCell configuration modification release procedure may be performed through the X1-C interface 581. The SCell configuration release procedure may be used to release the SCell configuration configured for the terminal with the CA between DUs. In FIG. 10D, the SCell configuration release procedure may be triggered by the DU #1 510. For example, the DU #1 510, which is DU providing a PCell, may be referred to as PCell DU. The DU #2 520, which is DU providing only an SCell, may be referred to as SCell DU.

Referring to FIG. 10D, in operation 1061, the DU #1 510 may transmit an SCell configuration release command message to the DU #2 520. For example, the SCell configuration release command message may include information on a cause of the release.

In operation 1063, the DU #2 520 may transmit a SCell configuration release completion message to the DU #1 510. For example, the SCell configuration release completion message may include the following information. For description of each parameter, FIG. 10A may be referred to.
- Transport information (X1-U Target IP address)
- Failed SCell List, Fail Cause
- SCell Configuration

In a scenario, the SCell configuration release procedure may be triggered from CU (e.g., the CU 505). For example, the CU 505 may transmit information (e.g., 'SCell To Be Removed List'IE) on an SCell list to be removed to the DU #1 510. The DU #1 510 may transmit the SCell configuration release command message to the DU #2 520 based on the information. The SCell configuration release command message may include cause information. The DU #2 520 may be DU providing an SCell indicated by the information. Through the transmission of the SCell configuration release command message, the SCell configured for the CA between DUs may be released.

FIG. 10E illustrates an SCell configuration release required procedure according to embodiments of the present disclosure. The SCell configuration modification release required procedure may be performed through the X1-C interface 581. The SCell configuration release required procedure may be used to release the SCell configuration configured for the terminal with the CA between DUs. Unlike FIG. 10D, the SCell configuration release procedure may be triggered first by the DU #2 520 instead of the DU #1 510. For example, the DU #1 510, which is DU providing a PCell, may be referred to as PCell DU. The DU #2 520, which is DU providing only an SCell, may be referred to as SCell DU.

Referring to FIG. 10E, in operation 1071, the DU #2 520 may transmit a SCell configuration release required message to the DU #1 510. For example, the SCell configuration release required message may include information on a cause of the release request.

In operation 1073, the DU #1 510 may transmit a SCell configuration release confirm message to the DU #2 520. For example, the SCell configuration release confirm message may include the following information. For description of each parameter, FIG. 10A may be referred to.
- Transport information (X1-U Target IP address)
- Failed SCell List, Fail Cause
- SCell Configuration

The DU #2 520 may transmit the SCell configuration release required message to the DU #1 510 in a case that release of an entire one or more SCell(s) of the DU #2 520 is required (e.g., cell access control (CAC)). The SCell configuration release required message may include cause information for the release. The DU #1 510 may transmit the SCell configuration release confirm message to the DU #2 520 in response to the SCell configuration release required message. Thereafter, the DU #1 510 may initiate a procedure for requesting the CU to modify a UE context. For example, the DU #1 510 may send a message (e.g., a UE Context Modification Required message) including SCell information (e.g., 'SCell To Be Removed List'IE) to be released to the CU (e.g., the CU 505). As an example, the context modification required message may include the following information.
- SCell To Be Removed List
- DU To CU RRC Information (CellGroupConfig, Selected BandCombinationIndex, Selected FeatureSetEntryIndex

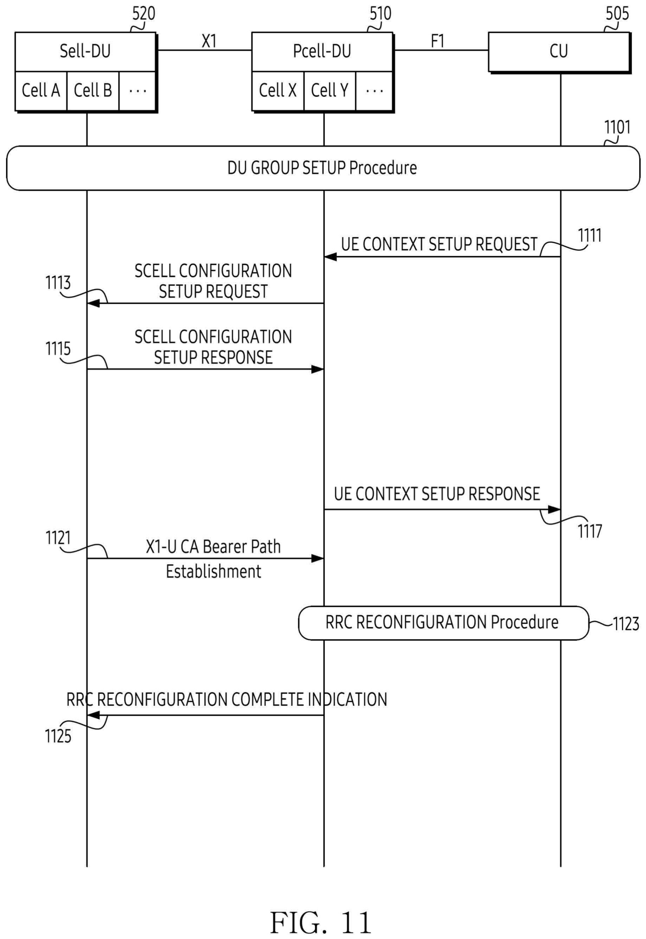

FIG. 11 illustrates signal flows for SCell configuration setup according to embodiments of the present disclosure. CU 505 and DU #1 510 may be connected to each other through an F1 interface. The DU #1 510 and DU #2 520 may be connected to each other through an X1 interface. For example, the DU #1 510, which is DU providing a PCell, may be PCell DU. The DU #2 520, which is DU providing only an SCell, may be an SCell DU.

Referring to FIG. 11, the DU #1 510 may provide one or more first cells. For example, the one or more first cells may include a cell #X and a cell #Y. The DU #2 520 may provide one or more second cells. For example, the one or more second cells may include a cell #A and cell #B.

In operation 1101, the DU #1 510 and the DU #2 520 may perform a DU group setup procedure. For the DU group setup procedure, at least one of the procedures described with reference to FIGS. 7A to 9 may be performed. Hereinafter, a situation in which the DU #1 510 and the DU #2 520 are configured as a DU group for inter-DU CA will be described.

In operation 1111, the CU 505 may transmit a UE context setup request message to the DU #1 510. The CU 505 may include configuration information on a signaling radio bearer (SRB)/data radio bearer (DRB) in the UE context setup procedure, in SRB/DRB to Be Setup List' IE. The CU 505 may transmit the UE context setup request message including the IE to the DU #1 510. In the UE context setup procedure, in a case that addition is required for the SCell of the DU #2 520, which is the SCell DU, (e.g., in a case that a signal of a new SCell for the CA between DUs is seen at a terminal 120 through a measurement report (MR) operation, or in a case that a Blind SCell addition is performed), the CU 505 may transmit, to the DU #1 510, 'SCell To Be Setup List' information including information on the SCell of the DU #2 520. The DU #1 510 may, for the SCell of the DU #2 520 received as "SCell To Be Setup List" from the CU 505 through the F1 UE context modification procedure, perform a check as to whether the SCell is an SCell of DU previously set as the DU group for the CA between DUs. The DU #1 510 may perform a setup procedure for an SCell for the CA between DUs with the DU #2 520, which is target DU.

For example, the UE context setup request message may include the following information.
- SCell To Be Setup List
- SRB/DRB to Be Setup List

In operation 1113, the DU #1 510 may transmit an SCell configuration setup request message to the DU #2 520. For example, the DU #1 may initiate the SCell configuration setup procedure in a case that the DU #1 is requested by the CU to perform the CA between DUs for an SCell of another DU with respect to a new UE. The description of FIG. 10A may be referred to for the SCell configuration setup request message. When receiving the UE context setup request message from the CU 505, the DU #1 510 may perform the setup for the SRB/DRB through the SCell configuration setup procedure with the DU (e.g., the DU #2 520), which is a target of the CA between DUs. The DU #1 510 may perform the setup for the SRB/DRB through the SCell configuration setup procedure with the DU #2 520, which is the target of the CA between DUs.

In operation 1115, the DU #2 520 may transmit an SCell configuration setup response message to the DU #1 510. For the SCell configuration setup response message, the description of FIG. 10A may be referred to.

According to one embodiment, the DU #1 510 may recognize information on a band, a bandwidth, SCS, a TDD ratio, Slice ID, PLMN, and DSS cell information (e.g., whether DSS is symmetric/asymmetric) of cells of a DU group previously received through a DU context management procedure (e.g., the DU group setup procedure of FIGS. 7A to 9). The DU #1 510 may select one or more SCells in valid cells. In a case that the selected cell is positioned in another DU (e.g., the DU #2 520), the DU #1 510 may transmit the SCell configuration setup request message to the other DU. The SCell configuration setup request message may include 'Selected SCell List' information. The 'Selected SCell List' information may include information on the selected SCell(s). The DU #2 520 may receive 'Selected PSCell ID' and 'Selected SCell List' through the SCell configuration setup request message. The DU #2 520 may select valid SCells in the DU #2 520. The DU #2 520 may transmit an SCell configuration setup response message including SCell configuration information on the selected SCells to the DU #1 510. In a case that an invalid SCell is included in the DU #2 520 among one or more SCells in 'Selected SCell List', the DU #2 520 may generate the SCell configuration setup response message including 'Failed SCell list' and cause information on the failure. The DU #2 520 may transmit the SCell configuration setup response message to the DU #1 510. The DU #1 510 may receive 'Failed SCell list'. The DU #1 510 may transmit, to the CU 505, a message including information on the failed SCell based on 'Failed SCell list'. For example, the DU #1 510 may transmit to the CU 505 a message including 'Failed SCell list' and the cause information for the failure.

According to one embodiment, the DU #1 may transmit bearer information (e.g., QCI/5QI ID, or PDCP/RLC/MAC configuration) to the DU #2 through the SCell configuration setup request message based on the SRB/DRB Setup List received from the CU. When receiving the bearer information (QCI/5QI ID, or PDCP/RLC/MAC configuration) through the SCell configuration setup request from the DU #1, the DU #2 may generate DRB suitable for the corresponding setup.

According to an embodiment, the DU #1 510 may recognize the band, the bandwidth, the SCS, the TTD ratio, the Slice ID, the PLMN, and the DSS cell information (e.g., whether DSS is symmetric/asymmetric) of the cells of the DU group through the DU context management procedure (e.g., the DU group setup procedure of FIGS. 7A to 9). The DU #1 may determine selected band combination and feature set information. The DU #1 510 may transmit the SCell configuration setup request message including the determined band combination and feature set information to the DU #2 520. When receiving the band combination and feature set information through an SCell configuration setup request from the DU #1 510, the DU #2 520 may set a cell within the corresponding band combination and feature set.

According to one embodiment, the DU #1 may determine C-RNTI information. The DU #1 510 may transmit the SCell configuration setup request message including the C-RNTI information to the DU #2 520. When receiving the C-RNTI information through the SCell configuration setup request from the DU #1 510, the DU #2 520 may check whether there is a conflict with the currently operating C-RNTI for the corresponding C-RNTI. Based on a confirmed result, the DU #2 520 may apply the C-RNTI information to the SCell.

According to an embodiment, the DU #1 510 may transmit information on a MRDC/NR/LTE UE capability received through the CU 505 to the DU #2 520 through the SCell configuration setup request message. When receiving the MRDC/NR/LTE UE capability information from the DU #1 510, the DU #2 520 may set a cell suitable within the corresponding capability information.

In operation 1117, the DU #1 510 may transmit a UE context setup response message to the CU 505. The DU #1 510 may obtain the SCell configuration from the DU #2 520 after performing the SCell configuration setup procedure. The DU #1 510 may input the SCell configuration into 'CellGroupConfig' IE of the UE context setup response message, and then transmit the UE context setup response message including an inputted result to the CU 505.

The DU #1 510 may determine a CA band combination and a feature set whose performance may be maximized based on information on a CA capability of the UE and a CA capability of the DU. After performing the SCell configuration setup procedure with the DU #2, the DU #1 may input values of each of 'Selected BandCombinationIndex' and 'Selected FeatureSetEntryIndex' of the UE context setup response message based on the selected CA band combination and feature set. The DU #1 510 may transmit the UE context setup response message to the CU 505. For example, the UE context setup response message may include the following information.
- SRB/DRB Setup List
- SRB/DRB Failed to be Setup List
- SCell Failed To Setup List (SCell ID, Cause)
- DU To CU RRC Information (CellGroupConfig, Selected BandCombinationIndex, Selected FeatureSetEntryIndex)

For the SCell of the DU #2 received as "SCell To Be Setup List" received from the CU, in a case that the corresponding cell is difficult to be configured for the CA between DUs or setup setting is not allowed, information on the cell may be included in the UE context setup response message. For example, the UE context setup response message may include 'SCell Failed To Setup List' information. The 'SCell Failed To Setup List' information may include information on a 'failed SCell ID' of the corresponding cell and a failed cause for each cell. The DU #1 510 may transmit the UE context setup response message including the information on the cell to the CU 505.

In a case of transmitting the UE context setup response message to the CU 505, the DU #1 510 may wait for a reconfiguration until receiving an indicator indicating completion of the reconfiguration.

Although not illustrated in FIG. 11, the DU #1 may, in a case of not capable of supporting the UE context setup request received from the CU, transmit a UE context setup failure message to the CU. The UE context setup failure message may include cause information on the failure of the UE context setup request message. For example, in a case that it identifies difficulty in accepting a specific SRB/DRB, through a setup procedure with the DU #2, the DU #1 may include the corresponding failed SRB/DRB information in "SRB/DRB Failed to be Setup List" of the UE context setup response message. The DU #1 510 may transmit the UE context setup response message to the CU 505.

In operation 1121, an X1-UCA bearer path between the DU #1 510 and the DU #2 520 may be established. When each of the DU #1 510 and the DU #2 520 receives transmission information (e.g., X1-U Source IP address, or X1-U Target IP address) through the SCell configuration procedure, the DU #1 510 may transmit a path setting and CA signal packet for CA signaling to the DU #2 520 or receive it from the DU #2 520through an X1-U interface.

In operation 1123, the DU #1 510 and the CU 505 may perform an RRC reconfiguration procedure. The RRC reconfiguration procedure may be performed based on the UE context setup procedure initiated by the CU 505. The CU 505 may generate an RRC reconfiguration message. The CU 505 may transmit a DL delivery message including the RRC reconfiguration message to the DU #1 510. The DU #1 510 may transmit the RRC reconfiguration message to the terminal 120 (e.g., UE). Parameters for the CA between DUs of the terminal 120 may be reconfigured through the RRC reconfiguration message. The parameters may include at least a portion of RRC layer parameters, PDCP layer parameters, RLC layer MAC layer parameters, and/or PHY layer parameters. The terminal 120 may transmit a reconfiguration completion message to the CU 505. The CU 505 may receive an RRC reconfiguration completion message from the terminal 120. In response to the RRC reconfiguration completion message, the CU may transmit, to the DU #1, an indicator (e.g., "RRC Reconfiguration Complete Indicator" IE) indicating the completion of the RRC reconfiguration. In a case of receiving the indicator indicating the completion of RRC reconfiguration from the CU 505, the DU #1 510 may apply a configuration according to the SCell setup procedure. For an RRC configuration for the SCell of the DU #1 510 or an RRC configuration for the SCell of the DU #2 520, if necessary, an SCell configuration modification procedure may be performed.

In operation 1125, the DU #1 510 may transmit the RRC reconfiguration completion message to the DU #2 520. The DU #2 520 may perform the CA between DUs with the terminal 120 after receiving the RRC reconfiguration completion message. The DU #2 520 may identify that the RRC configuration changed according to the SCell configuration setup procedure of the DU #1 510 is applied to the terminal 120. For the RRC configuration for the SCell of the DU #1 510 or the RRC configuration for the SCell of the DU #2 520, if necessary, the SCell configuration modification procedure may be performed.

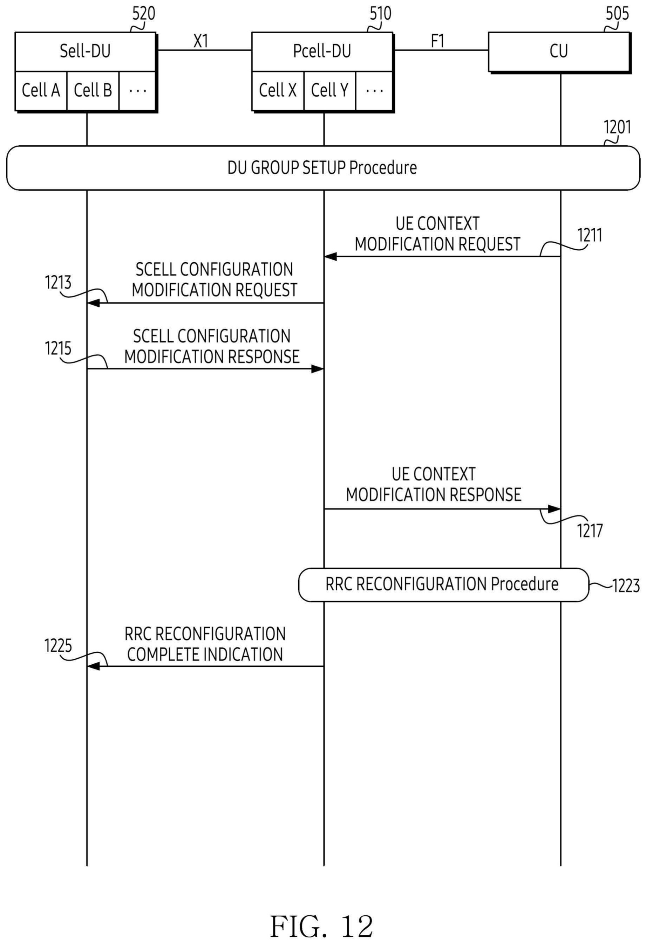

FIG. 12 illustrates signal flows for an SCell configuration modification procedure initiated by a central unit (CU) according to embodiments of the present disclosure. CU 505 and DU #1 510 may be connected to each other through an F1 interface. The DU #1 510 and DU #2 520 may be connected to each other through an X1 interface. For example, the DU #1 510, which is DU providing a PCell, may be PCell DU. The DU #2 520, which is DU providing only an SCell, may be an SCell DU.

Referring to FIG. 12, the DU #1 510 may provide one or more first cells. For example, the one or more first cells may include a cell #X and a cell #Y. The DU #2 520 may provide one or more second cells. For example, the one or more second cells may include a cell #A and a cell #B.

In operation 1201, the DU #1 510 and the DU #2 520 may perform a DU group setup procedure. For the DU group setup procedure, at least one of the procedures described with reference to FIGS. 7A to 9 may be performed. Hereinafter, a situation in which the DU #1 510 and the DU #2 520 are configured as a DU group for inter-DU CA will be described.

In operation 1211, the CU 505 may transmit a UE context modification request message to the DU #1 510. In a case that a new setting for signaling radio bearer (SRB) / data radio bearer (DRB) is required, the CU 505 may include configuration information on the SRB/DRB in 'SRB/DRB to Be Setup List' IE. The DU #1 510 may receive the 'SRB/DRB to Be Setup List' IE. The DU #1 510 may perform setup for SRB/DRB through an SCell configuration setup procedure or an SCell configuration modification procedure with DU (e.g., the DU #2 520) for the CA between DUs. In a case that a change to the SRB/DRB is required, the CU 505 may include configuration information on SRB/DRB in an 'SRB/DRB to Be Modified List' IE. The DU #1 510 may receive the 'SRB/DRB to Be Modified List' IE. The DU #1 510 may perform the change for the SRB/DRB through the SCell configuration setup procedure or the SCell configuration modification procedure with the DU (e.g., the DU #2 520) for the CA between DUs. In a case that release of the SRB/DRB is required, the CU 505 may include configuration information on SRB/DRB in an 'SRB/DRB to Be Released List' IE. The DU #1 510 may receive the 'SRB/DRB to Be Released List' IE. The DU #1 510 may perform the release for the SRB/DRB through the SCell configuration setup procedure or the SCell configuration modification procedure with the DU (e.g., the DU #2 520) for the CA between DUs. For example, in a case that it is difficult to accept a setup for a specific SRB/DRB through the SCell configuration setup procedure or the SCell configuration modification procedure with the DU #2 520), the DU #1 510 may include corresponding failed SRB/DRB information in the 'SRB/DRB Failed to Be Setup List' of a UE context modification response message. The DU #1 510 may transmit the UE context modification response message to the CU 505.

In the UE context modification procedure, in a case that addition is required for the SCell of the DU #2 520, which is the SCell DU, (e.g., in a case that a signal of a new SCell for the CA between DUs is seen at a terminal 120 through a measurement report (MR) operation, or in a case that a Blind SCell addition is performed), the CU 505 may transmit, to the DU #1 510, "SCell To Be Setup List" information including information on the SCell of the DU #2 520. The DU #1 510 may, for the SCell of the DU #2 520 received as "SCell To Be Setup List" from the CU 505 through the F1 UE context modification procedure, perform a check as to whether the SCell is an SCell of DU previously set as the DU group for the CA between DUs. The DU #1 510 may perform a setup procedure for an SCell for the CA between DUs with the DU #2 520, which is target DU.

In the UE context modification procedure, in a case that release is required for the SCell of the DU #2 520, which is the SCell-DU (e.g., in a case that a signal of a new SCell for the CA between DUs is weak at the terminal 120 through a measurement report (MR) operation), the CU 505 may transmit, to the DU #1 510, "SCell To Be Removed List" information including the information on the SCell of the DU #2 520. For the SCell of the DU #2 520 received as "SCell To Be Removed List" from the CU 505 through the F1 UE context modification procedure, the DU #1 510 may perform a check as to whether the SCell is the SCell of the DU previously set in the DU group for the CA between DUs. The DU #1 510 may perform a release procedure for the CA between DUs with the DU #2 520, which is target DU.

For example, the UE context modification request message may include the following information.
- SRB/DRB to Be Setup List
- DRB to Be Modified List
- SRB/DRB To Be Released List
- SCell To Be Setup List
- SCell To Be Removed List

In operation 1213, the DU #1 510 may transmit an SCell configuration modification request message to the DU #2 520. For example, the DU #1 510 may initiate an SCell configuration modification procedure in a case that a configuration change is required in a state in which the CA between DUs is in operation for the terminal. For the SCell configuration modification request message, the description of FIG. 10B may be referred to. When receiving the UE context modification request message from the CU 505, the DU #1 510 may perform the modification for the SRB/DRB through the SCell configuration modification procedure with the DU (e.g., the DU #2 520), which is a target of the CA between DUs. The DU #1 510 may perform the modification on the SRB/DRB through the SCell configuration modification procedure with the DU #2 520, which is the target of the CA between DUs.

In operation 1215, the DU #2 520 may transmit an SCell configuration modification response message to the DU #1 510. For the SCell configuration modification response message, the description of FIG. 10B may be referred to.

According to an embodiment, the DU #1 510 may recognize a band, a bandwidth, SCS, a TTD ratio, Slice ID, PLMN, and DSS cell information (e.g., whether DSS is symmetric or asymmetric) of cells of the DU group received in advance through a DU context management procedure (e.g., the DU group modification procedure of FIGS. 7A to 9). The DU #1 510 may select one or more SCells in a valid cell. In a case that the selected cell is positioned in another DU (e.g., the DU #2 520), the DU #1 510 may transmit an SCell configuration modification request message to the other DU. The SCell configuration modification request message may include 'Selected SCell List' information. The 'Selected SCell List' information may include information on the selected SCell(s). The DU #2 520 may receive 'Selected PSCell ID' and 'Selected SCell List' through the SCell configuration modification request message. The DU #2 520 may select a valid SCell in the DU #2 520. The DU #2 520 may transmit an SCell configuration modification response message including SCell configuration information on the selected SCell to the DU #1 510. In a case that an invalid SCell is included in the DU #2 520 among one or more SCells in 'Selected SCell List', the DU #2 520 may generate the SCell configuration modification response message including 'Failed SCell List' and cause information on the failure. The DU #2 520 may transmit the SCell configuration modification response message to the DU #1 510. The DU #1 510 may receive 'Failed SCell list'. The DU #1 510 may transmit a message including information on the failed SCell to the CU 505 based on 'Failed SCell list'. For example, the DU #1 510 may transmit, to the CU 505, a message including 'Failed SCell list' and the cause information about the failure.

According to an embodiment, the DU #1 510 may transmit bearer information (e.g., QCI/5QI ID, or PDCP/RLC/MAC configuration) to the DU #2 520 through the SCell configuration modification request message based on the SRB/DRB Setup list received from the CU 505. When receiving the bearer information (QCI/5QI ID, or PDCP/RLC/MAC configuration) through the SCell configuration modification request from the DU #1 510, the DU #2 520 may generate DRB suitable for the corresponding setup.

According to an embodiment, the DU #1 510 may recognize the band, the bandwidth, the SCS, the TTD ratio, the Slice ID, the PLMN, and the DSS cell information (e.g., whether DSS is symmetric or asymmetric) of the cells of the DU group through the DU context management procedure (e.g., the DU group modification procedure of FIGS. 7A to 9). The DU #1 510 may determine selected band combination and feature set information. The DU #1 510 may transmit the SCell configuration modification request message including the determined band combination and feature set information to the DU #2 520. When receiving the band combination and feature set information through the SCell configuration modification request from the DU #1 510, the DU #2 520 may set an RLC layer, a MAC layer, and a cell within the corresponding band combination and feature set.

According to an embodiment, the DU #1 510 may transmit information on a MRDC/NR/LTE UE capability received through the CU 505 to the DU #2 520 through the SCell configuration modification request message. When receiving the MRDC/NR/LTE UE capability information from the DU #1 510, the DU #2 520 may set a cell suitable within the corresponding capability information.

In operation 1217, the DU #1 510 may transmit a UE context modification response message (UE CONTEXT SETUP RESPONSE) to the CU 505. The DU #1 510 may obtain the SCell configuration from the DU #2 520 after performing the SCell configuration setup procedure. The DU #1 510 may input the SCell configuration into the 'CellGroupConfig' IE of the UE context setup response message, and then transmit the UE context setup response message including an inputted result to the CU 505.

The DU #1 510 may determine a CA band combination and a feature set whose performance may be maximized based on a CA capability of the UE and a CA capability information of the DU. After performing the SCell configuration modification procedure with the DU #2 520, the DU #1 510 may input values of each of 'Selected Band CombinationIndex' and 'Selected FeatureSetEntryIndex' of the UE context modification response message based on the selected CA band combination and feature set. The DU #1 510 may transmit the UE context modification response message to the CU 505. For example, the UE context modification response message may include the following information.
- SRB/DRB Setup List
- SRB/DRB Modified List
- SRB/DRB Failed to be Setup List
- SCell Failed To Setup List (SCell ID, Cause)
- DU To CU RRC Information (CellGroupConfig, Selected BandCombinationIndex, Selected FeatureSetEntryIndex)

For the SCell of the DU #2 520 received as 'SCell To Be Setup List' received from the CU 505, in a case that the corresponding cell is difficult to be configured for the CA between DUs or setup setting is not allowed, information on the cell may be included in the UE context modification response message. For example, the UE context modification response message may include 'SCell Failed To Setup List' information. The 'SCell Failed To Setup List' information may include information on 'failed SCell ID' of the corresponding cell and a failed cause for each cell. The DU #1 510 may transmit the UE context modification response message including the information on the cell to the CU 505.

In a case of transmitting the UE context modification response message to the CU 505, the DU #1 510 may wait for a reconfiguration until receiving an indicator indicating completion of the reconfiguration.

Although not illustrated in FIG. 12, the DU #1 510 may, in a case of not capable of supporting the UE context modification request received from the CU 505, transmit a UE context modification failure message to the CU 505. The UE context modification failure message may include cause information for the failure of the UE context modification request message. For example, in a case that it identifies difficulty in accepting a specific SRB/DRB, through a setup procedure with the DU #2, the DU #1 may include the corresponding failed SRB/DRB information in 'SRB/DRB Failed to Be Setup List' of the UE context modification response message. The DU #1 510 may transmit the UE context modification response message to the CU 505.

In operation 1223, the DU #1 510 and the CU 505 may perform an RRC reconfiguration procedure. The RRC reconfiguration procedure may be performed based on the UE context modification procedure initiated by the CU 505. The CU 505 may generate an RRC reconfiguration message. The CU 505 may transmit a DL delivery message including the RRC reconfiguration message to the DU #1 510. The DU #1 510 may transmit the RRC reconfiguration message to the terminal 120 (e.g., UE). Parameters for the CA between DUs of the terminal 120 may be reconfigured through the RRC reconfiguration message. The parameters may include at least a portion of RRC layer parameters, PDCP layer parameters, RLC layer MAC layer parameters, and/or PHY layer parameters. The terminal 120 may transmit a reconfiguration completion message to the CU 505. The CU 505 may receive an RRC reconfiguration completion message from the terminal 120. In response to the RRC reconfiguration completion message, the CU may transmit, to the DU #1, an indicator (e.g., "RRC Reconfiguration Complete Indicator" IE) indicating the completion of the RRC reconfiguration. In a case of receiving the indicator indicating the completion of RRC reconfiguration from the CU 505, the DU #1 510 may apply a configuration according to the SCell modification procedure. For an RRC configuration for the SCell of the DU #1 510 or an RRC configuration for the SCell of the DU #2 520, if necessary, an SCell configuration modification procedure may be performed.

In operation 1225, the DU #1 510 may transmit the RRC reconfiguration completion message to the DU #2 520. The DU #2 520 may perform the CA between DUs with the terminal 120 after receiving the RRC reconfiguration completion message. The DU #2 520 may identify that the RRC configuration changed according to the SCell configuration modification procedure of the DU #1 510 is applied to the terminal 120. For the RRC configuration for the SCell of the DU #1 510 or the RRC configuration for the SCell of the DU #2 520, if necessary, the SCell configuration modification procedure may be performed.

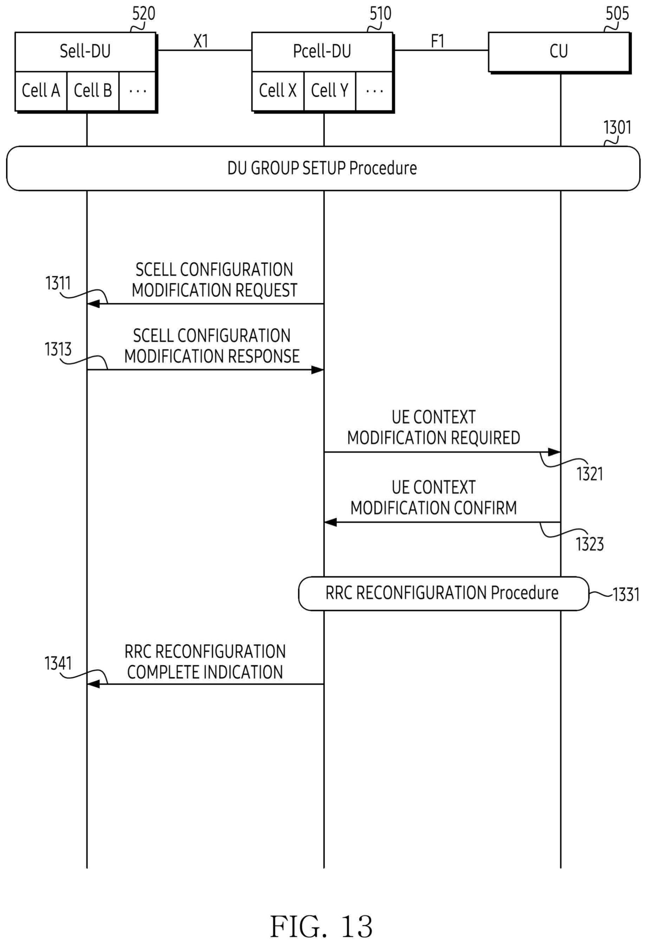

FIG. 13 illustrates signal flows for an SCell configuration modification procedure initiated by a primary cell (PCell)-DU according to embodiments of the present disclosure. CU 505 and DU #1 510 may be connected to each other through an F1 interface. The DU #1 510 and DU #2 520 may be connected to each other through an X1 interface. For example, the DU #1 510, which is DU providing a PCell, may be PCell DU. The DU #2 520, which is DU providing only an SCell, may be an SCell DU.

Referring to FIG. 13, the DU #1 510 may provide one or more first cells. For example, the one or more first cells may include a cell #X and a cell #Y. The DU #2 520 may provide one or more second cells. For example, the one or more second cells may include a cell #A and a cell #B.

In operation 1301, the DU #1 510 and the DU #2 520 may perform a DU group setup procedure. For the DU group setup procedure, at least one of the procedures described with reference to FIGS. 7A to 9 may be performed. Hereinafter, a situation in which the DU #1 510 and the DU #2 520 are configured as a DU group for inter-DU CA will be described.

In operation 1311, the DU #1 510 may transmit an SCell configuration modification request message to the DU #2 520. For example, the DU #1 510 may initiate an SCell configuration modification procedure in a case that a configuration change is required in a state in which the CA between DUs is in operation for the terminal. For the SCell configuration modification request message, the description of FIG. 10B may be referred to.

In operation 1313, it may transmit an SCell configuration modification response message to the DU #1 510. For the SCell configuration modification response message, the description of FIG. 10B may be referred to. For example, the DU #2 520 may receive changed 'Transport information' (X1-U Source/Target IP address) from the DU #1 510 through the SCell configuration modification request procedure. The DU #2 520 may apply a changed value. For example, the DU #2 520 may receive changed 'Selected PScell ID' and 'Selected SCell List' through the SCell configuration modification request procedure. The DU #2 520 should select a valid SCell. The DU #2 520 may transmit information on the selected SCell (e.g., SCell configuration information: may include RLC/MAC/PHY related parameters) to the DU #1 510. The DU #2 520 may transmit the SCell configuration modification response message including the information on the selected SCell to the DU #1 510. n a case that 'Selected SCell List' is an invalid SCell, the DU #2 520 may transmit the SCell configuration modification response message including 'Failed SCell List' and 'Fail cause' to the DU #1 510.

According to an embodiment, the DU #1 510 may transmit bearer information (e.g., QCI/5QI ID, or PDCP/RLC/MAC configuration) to the DU #2 520 through the SCell configuration modification request message. When receiving the bearer information (QCI/5QI ID, or PDCP/RLC/MAC configuration) through the SCell configuration modification request from the DU #1 510, the DU #2 520 may generate DRB suitable for the corresponding setup.

According to an embodiment, the DU #1 510 may transmit information on a MRDC/NR/LTE UE capability to the DU #2 520 through the SCell configuration modification request message. When receiving the MRDC/NR/LTE UE capability information from the DU #1 510, the DU #2 520 may set parameters and cells for each layer (e.g., RLC, MAC, or PHY) suitable within the corresponding capability information.

According to an embodiment, the DU #1 510 may recognize a band, a bandwidth, SCS, a TTD ratio, Slice ID, PLMN, and DSS cell information (e.g., whether DSS is symmetric/asymmetric) of cells of a DU group through a DU context management procedure (e.g., the DU group setup procedure of FIGS. 7A to 9). The DU #1 510 may determine selected band combination and feature set information. The DU #1 510 may transmit the SCell configuration modification request message including the determined band combination and feature set information to the DU #2 520. When receiving the band combination and feature set information through an SCell configuration modification request from the DU #1 510, the DU #2 520 may set parameters and cells for each layer (e.g., RLC, MAC, PHY) within the corresponding band combination and feature set.

In operation 1321, the DU #1 510 may transmit a UE context modification required message to the CU 505. The DU #1 510 may, in a case that RRC reconfiguration is required for an SCell of the DU #1 510 or an SCell of the DU #2 520 through a UE context modification required procedure, include information to be reconfigured in DU To CU RRC Information ('CellGroupConfig' IE of TS 38.331) in a message (e.g., the UE context modification required message). The DU #1 510 may transmit the message to the CU 505. For example, when the DU #1 510 receives "Failed SCell list" and "Cause" from the DU #2 520, the DU #1 510 may transmit the UE context modification required message including "Failed SCell list" and "Cause" to the CU 505.

In operation 1323, the CU 505 may transmit a UE context modification confirm message to the DU #1 510. The CU 505 may receive the UE context modification required message from the DU #1 510. The CU 505 may transmit the UE context modification confirm message in response to the UE context modification required message. For example, the UE context modification confirm message may include 'DRB Modified List' information.

When receiving the UE context modification confirm message from the CU 505, the DU #1 510 may wait for a reconfiguration until receiving an indicator indicating completion of the reconfiguration. Although not illustrated in FIG. 13, the CU 505 may transmit a UE context modification refuse message to the CU 505 in a case of not capable of supporting the UE context modification required message received from the DU #1 510. The UE context modification refuse message may include cause information.

In operation 1331, the DU #1 510 and the CU 505 may perform an RRC reconfiguration procedure. The RRC reconfiguration procedure may be performed based on the UE context modification required procedure initiated by the DU #1 510. The CU 505 may generate an RRC reconfiguration message. The CU 505 may transmit a DL delivery message including the RRC reconfiguration message to the DU #1 510. The DU #1 510 may transmit the RRC reconfiguration message to a terminal 120 (e.g., UE). Parameters for the CA between DUs of the terminal 120 may be reconfigured through the RRC reconfiguration message. The parameters may include at least a portion of RRC layer parameters, PDCP layer parameters, RLC layer MAC layer parameters, and/or PHY layer parameters. The terminal 120 may transmit a reconfiguration completion message to the CU 505. The CU 505 may receive an RRC reconfiguration completion message from the terminal 120. The CU 505 may transmit an indicator (e.g., 'RRC Reconfiguration Complete Indicator' IE) indicating the completion of the RRC reconfiguration to the DU #1 510, in response to the RRC reconfiguration completion message. In a case of receiving the indicator indicating the completion of RRC reconfiguration from the CU 505, the DU #1 510 may apply a configuration according to the SCell configuration modification procedure. For an RRC configuration for the SCell of the DU #1 510 or an RRC configuration for the SCell of the DU #2 520, if necessary, the SCell configuration modification procedure may be performed.

In operation 1341, the DU #1 510 may transmit the RRC reconfiguration completion message to the DU #2 520. The DU #2 520 may perform the CA between DUs with the terminal 120 after receiving the RRC reconfiguration completion message. The DU #2 520 may identify that the RRC configuration changed according to the SCell configuration modification procedure of the DU #1 510 is applied to the terminal 120. For the RRC configuration for the SCell of the DU #1 510 or the RRC configuration for the SCell of the DU #2 520, if necessary, the SCell configuration modification procedure may be performed. In a case that the RRC reconfiguration procedure between the terminal and the network is triggered due to the SCell configuration modification procedure, the DU #2 520 may initiate the CA between DUs based on the changed setting criteria after receiving the RRC reconfiguration completion message (e.g., 'Reconfiguration Complete Indicator').

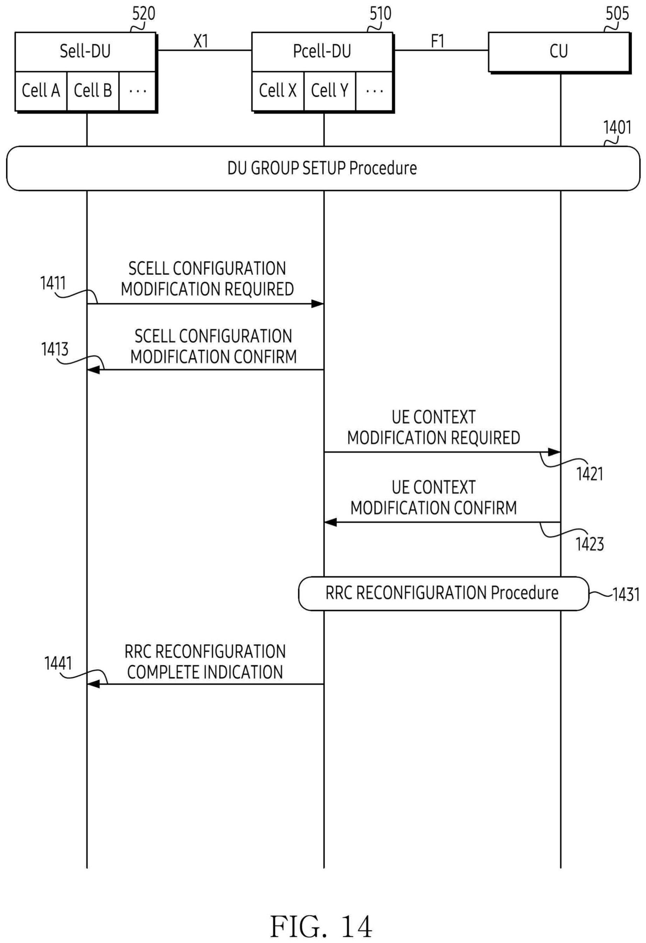

FIG. 14 illustrates signal flows for an SCell configuration modification procedure initiated by an SCell-DU according to embodiments of the present disclosure. CU 505 and DU #1 510 may be connected to each other through an F1 interface. The DU #1 510 and DU #2 520 may be connected to each other through an X1 interface. For example, the DU #1 510, which is DU providing a PCell, may be PCell DU. The DU #2 520, which is DU providing only an SCell, may be an SCell DU.

Referring to FIG. 14, the DU #1 510 may provide one or more first cells. For example, the one or more first cells may include a cell #X and a cell #Y. The DU #2 520 may provide one or more second cells. For example, the one or more second cells may include a cell #A and a cell #B.

In operation 1401, the DU #1 510 and the DU #2 520 may perform a DU group setup procedure. For the DU group setup procedure, at least one of the procedures described with reference to FIGS. 7A to 9 may be performed. Hereinafter, a situation in which the DU #1 510 and the DU #2 520 are configured as a DU group for inter-DU CA will be described.

In operation 1411, the DU #2 520 may transmit an SCell configuration modification required message to the DU #1 510. For the SCell configuration modification required message, FIG. 10C may be referred to. For example, the DU #1 510 may receive changed 'Transport information' (X1-U Source/Target IP address) from the DU #2 520 through the SCell configuration modification required procedure. The DU #1 510 may apply a changed value.

In operation 1413, the DU #1 510 may transmit an SCell configuration modification confirm message to the DU #2 520. For the SCell configuration modification confirm message, FIG. 10C may be referred to.

In operation 1421, the DU #1 510 may transmit a UE context modification required message to the CU 505. The DU #1 510 may, in a case that RRC reconfiguration is required for an SCell of the DU #1 510 or an SCell of the DU #2 520 through a UE context modification required procedure, include information to be reconfigured in DU To CU RRC Information ('CellGroupConfig' IE of TS 38.331) in a message (e.g., the UE context modification required message). The DU #1 510 may transmit the message to the CU 505.

In operation 1423, the CU 505 may transmit a UE context modification confirm message to the DU #1 510. The CU 505 may receive the UE context modification required message from the DU #1 510. The CU 505 may transmit the UE context modification confirm message in response to the UE context modification required message. For example, the UE context modification confirm message may include 'DRB Modified List' information.

When receiving the UE context modification confirm message from the CU 505, the DU #1 510 may wait for a reconfiguration until receiving an indicator indicating completion of the reconfiguration. Although not illustrated in FIG. 14, the CU 505 may transmit a UE context modification refuse message to the CU 505 in a case of not capable of supporting the UE context modification required message received from the DU #1 510. The UE context modification refuse message may include cause information.

In operation 1431, the DU #1 510 and the CU 505 may perform an RRC reconfiguration procedure. The RRC reconfiguration procedure may be performed based on the UE context modification required procedure initiated by the DU #1 510. The CU 505 may generate an RRC reconfiguration message. The CU 505 may transmit a DL delivery message including the RRC reconfiguration message to the DU #1 510. The DU #1 510 may transmit the RRC reconfiguration message to a terminal 120 (e.g., UE). Parameters for the CA between DUs of the terminal 120 may be reconfigured through the RRC reconfiguration message. The parameters may include at least a portion of RRC layer parameters, PDCP layer parameters, RLC layer MAC layer parameters, and/or PHY layer parameters. The terminal 120 may transmit a reconfiguration completion message to the CU 505. The CU 505 may receive the RRC reconfiguration completion message from the terminal 120. The CU 505 may transmit an indicator (e.g., 'RRC Reconfiguration Complete Indicator' IE) indicating the completion of the RRC reconfiguration to the DU #1 510, in response to the RRC reconfiguration completion message. In a case of receiving the indicator indicating the completion of RRC reconfiguration from the CU 505, the DU #1 510 may apply a configuration according to the SCell configuration modification procedure. For an RRC configuration for the SCell of the DU #1 510 or an RRC configuration for the SCell of the DU #2 520, if necessary, the SCell configuration modification procedure may be performed.

In operation 1441, the DU #1 510 may transmit the RRC reconfiguration completion message to the DU #2 520. The DU #2 520 may perform the CA between DUs with the terminal 120 after receiving the RRC reconfiguration completion message. The DU #2 520 may identify that the RRC configuration changed according to the SCell configuration modification required procedure is applied to the terminal 120. For an RRC configuration for the SCell of the DU #1 510 or an RRC configuration for the SCell of the DU #2 520, if necessary, the SCell configuration modification procedure may be performed.

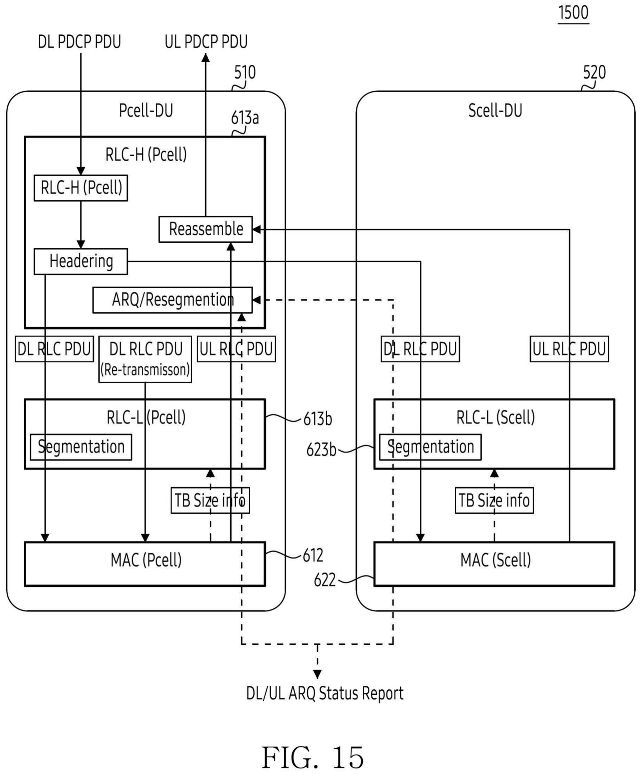

FIG. 15 illustrates an example of a user plane for spectrum aggregation between DUs according to embodiments of the present disclosure. In FIG. 15, for CA between DUs, an L2 protocol and a function for each protocol are described.

Referring to FIG. 15, DU #1 510 may be PCell DU. The DU #1 510 may include a MAC processing module 612, an RLC-H processing module 613a, and an RLC-L processing module 613b. The MAC processing module 612 may be configured to process functions of MAC 422 and MAC 472. The RLC-H processing module 613a and the RLC-L processing module 613b may be configured to process functions of RLC 424 and RLC 474. Among the functions of the RLC 424 and the RLC 474, functions (e.g., TTI-based functions) requiring real-time processing may be processed by the RLC-L processing module 613b, and other functions requiring non-real-time processing may be processed by the RLC-H processing module 613a. The DU #2 520 may be SCell DU. The DU #2 520 may include a MAC processing module 622 and an RLC-L processing module 623b.

The RLC-H processing module 613a may receive DL PDCP PDU or transmit UL PDCP PDU from an upper PDCP protocol. The RLC-H processing module 613a may perform the following RLC sub-functions among RLC functions.
- SN numbering
- Headering
- Reassemble
- ARQ
- Re-segmentation

The RLC-L processing module 613b and the RLC-L processing module 623b may transmit DL RLC PDU or receive UL RLC PDU from a lower MAC protocol. The RLC-L processing module 613b and the RLC-L processing module 623b may perform the following RLC function among the RLC functions.
- Segmentation.

The MAC processing module 612 and the MAC processing module 622 may perform an existing MAC function in conjunction with each upper RLC-L processing module.

Between the RLC-H processing module 613a and the RLC-L processing module 613b, it may transmit and receive the DL RLC PDU and/or the UL RLC PDU through an X1-U interface. The RLC-H processing module 613a and the RLC-L processing module 623b may transmit and receive a flow control signal for distribution to the DL RLC PDU of the RLC-H processing module 613a and the RLC-L processing module 613b through an X1-U interface 852. The MAC processing module 612 and the MAC processing module 622 may transmit and receive a MAC control signal required for supporting CA operation, such as a HARQ operation, through an X1-U interface 852.

### DL PDU processing operation

When receiving the DL PDCP PDU, the RLC-H processing module 613a may perform RLC SN numbering and RLC Headering. Thereafter, the RLC-H processing module 613a may perform distribution to each of the DU #1 510 and the DU #2 520. The RLC-H processing module 613a may distribute and deliver an RLC PDU to each of the RLC-H processing module 613a and the RLC-L processing module 613b.

The RLC-L processing module 613b may receive the RLC PDU from the RLC-H processing module 613a. The RLC-L processing module 613b may obtain transport block size information (TB size info) from the MAC processing module 612, which is each lower layer. The RLC-L processing module 613b may transmit the RLC PDU to the MAC processing module 612 in a case that a size of the current RLC PDU is smaller than the transport block size, and segmentation may be performed based on the transport block size, in a case that the size of the current RLC PDU is greater than or equal to the transport block size. Additional parameters may be used for the above-described segmentation. For segmentation information (SI) of an RLC header, update may be performed according to whether it is complete SDU or a first/last/middle segment. A segment offset (SO) may indicate a position of a current segment.

### UL PDU processing operation

When the RLC-L processing module 613b and the LC-L processing module 623b receive UL RLC PDU from a lower MAC, respectively, the received UL RLC PDU may be forwarded to the RLC-H processing module 613a. The RLC-H processing module 613a may receive UL RLC PDUs from each of the RLC-L processing module 613b and the LC-L processing module 623b. The RLC-H processing module 613a may perform reassembly in a case that the received UL RLC PDU is segmented. The RLC-H processing module 613a may transmit the reassembled RLC PDU or the received RLC PDU to a node (e.g., the CU 505) in charge of the upper PDCP.

### ARQ processing operation

The RLC-H processing module 613a may receive a status report on the DL PDCP PDU from a terminal. In a case that retransmission is required due to NACK, the corresponding DL PDCP PDU may be retransmitted. For the RLC-H processing module 613a, in a case that a retransmission packet is segment PDU, segment PDU may be used. The RLC-H processing module 613a may transmit a status report on the UL PDCP PDU to the terminal and receive a retransmission packet from the terminal.

According to an embodiment, a message provided in a user plane between the DU #1 510 and the DU #2 520 may have various formats. The following format may be used to exchange data such as RLC PDU between DUs in which CA between DUs is configured.

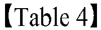

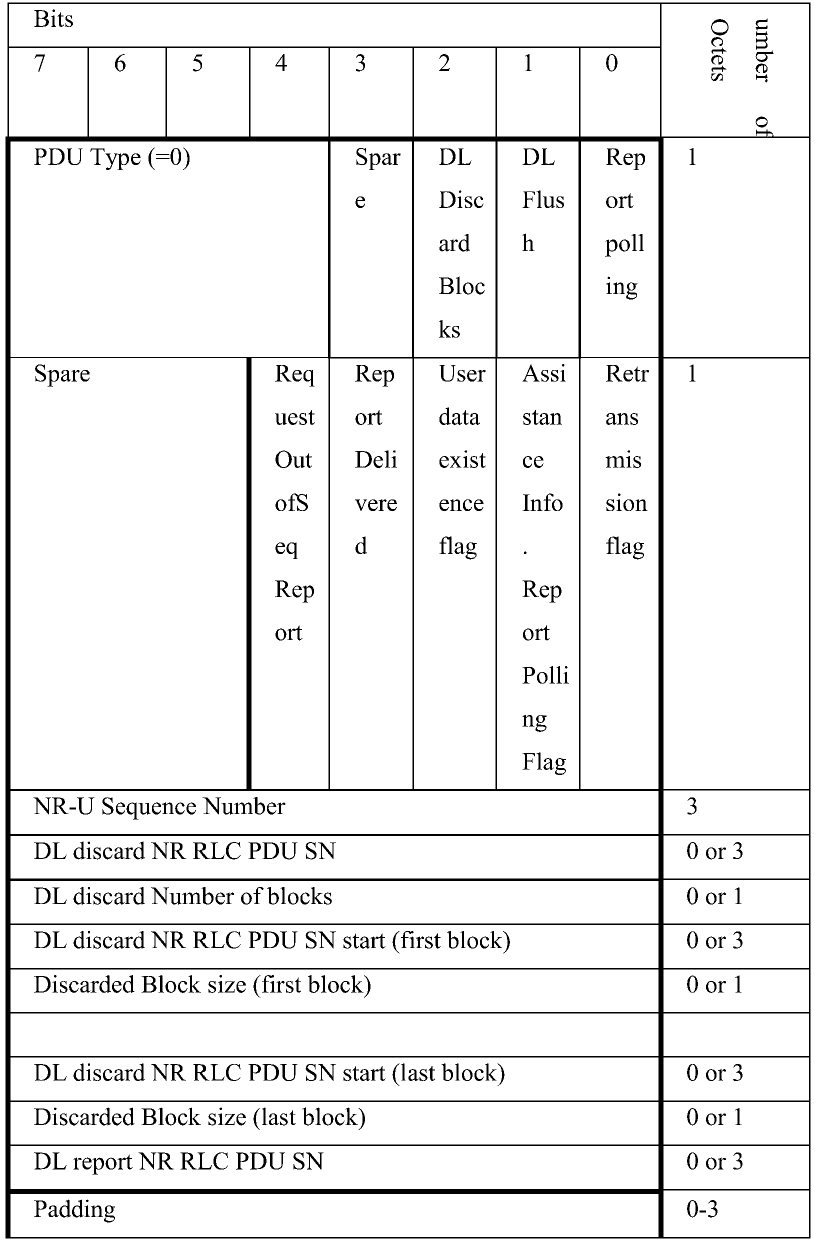

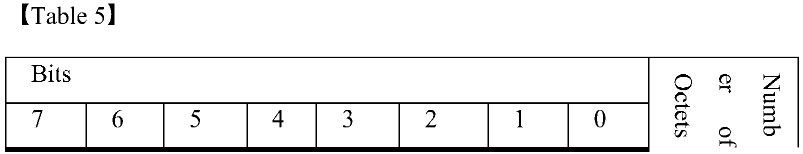

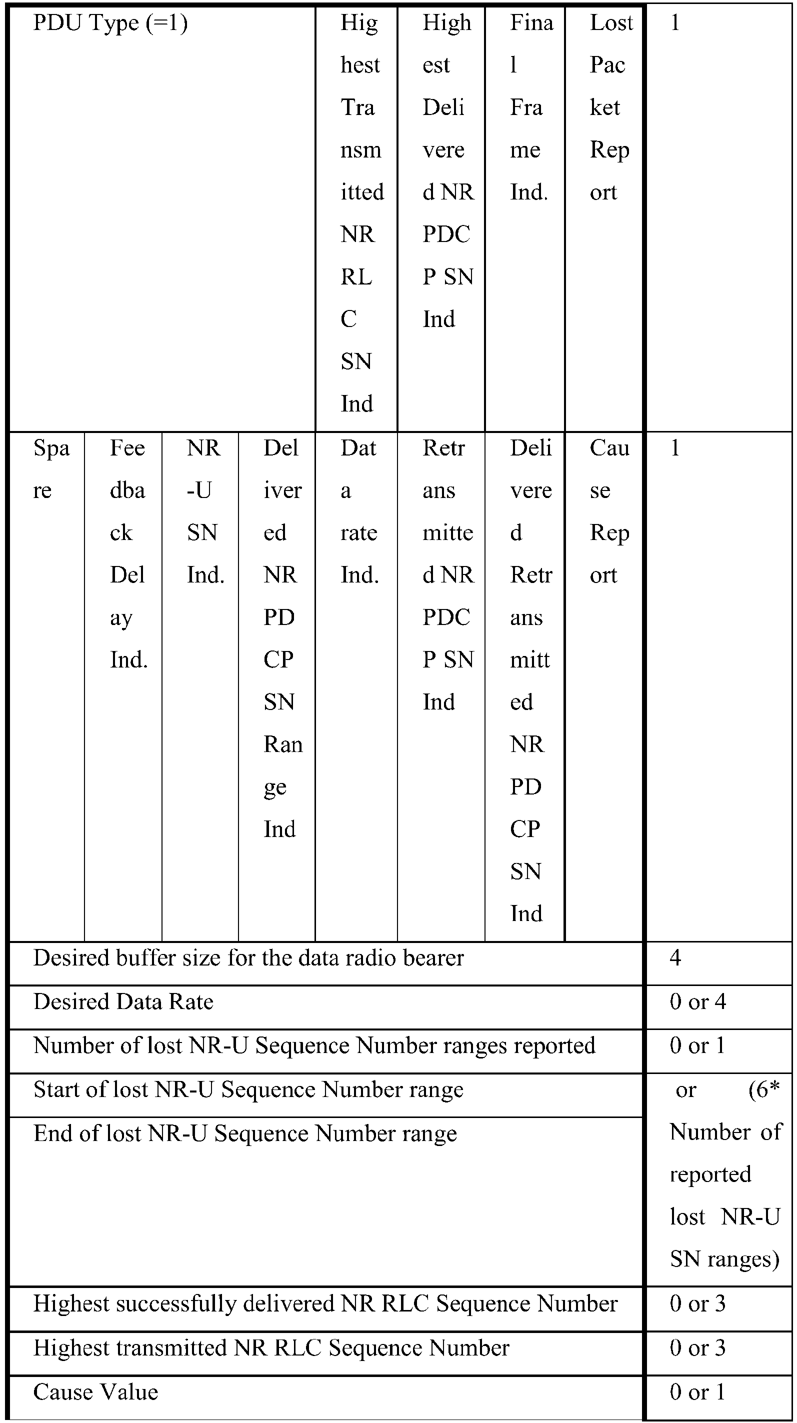

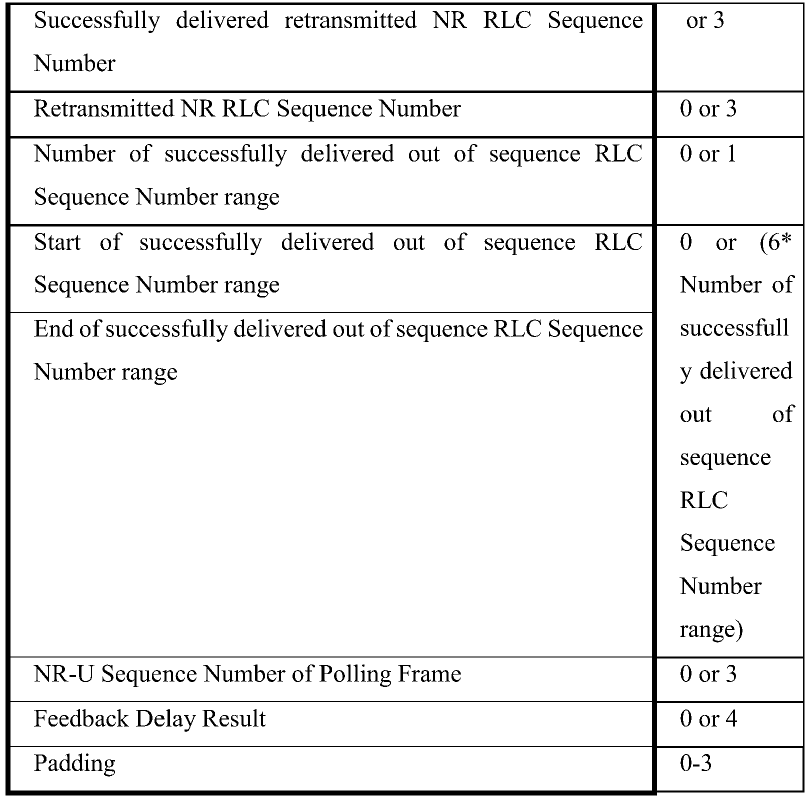

The present disclosure, unlike the prior approach of configuring CAs for a plurality of cells within one DU, provides CAs between different DUs, which not only increases the capacity of the DUs for an operator but also enables more efficient CA operation.

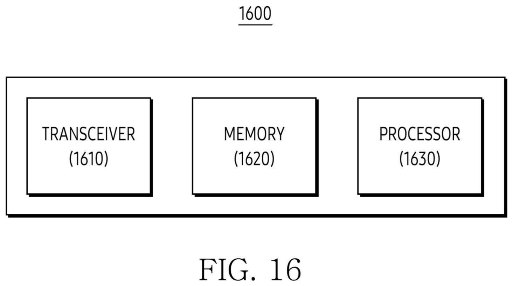

FIG. 16 illustrates components of an electronic device according to embodiments of the present disclosure. A structure illustrated in FIG. 16 may be understood as a configuration of a device having at least one function of the above-described PCell-DU, SCell-DU, or CU. Terms such as "...unit" and "...module" used herein refer to a unit that processes at least one function or operation, and may be implemented by hardware, software, or a combination of hardware and software.

Referring to FIG. 16, an electronic device may include a transceiver 1610, memory 1620, and a processor 1630.

The transceiver 1610 provides an interface for performing communication with other devices in a network. That is, the transceiver 1610 converts a bit stream transmitted from the electronic device to another electronic device into a physical signal, and converts a physical signal received from the other electronic device into a bit stream. That is, the transceiver 1610 may transmit or receive a signal. Accordingly, the transceiver 1610 may be referred to as a modem, a communication unit, a transmit unit, a receive unit, or a transmit/receive unit. At this time, the transceiver 1610 allows the electronic device to communicate with other electronic devices or systems through a backhaul connection (e.g., wired backhaul or wireless backhaul) or through the network. The transceiver 1610 may include one or more transceivers.

The memory 1620 stores data such as a basic program, an application program, and setting information, and the like, for an operation of the electronic device. The memory 1620 may be configured with volatile memory, non-volatile memory, or a combination of volatile memory and non-volatile memory. In addition, the memory 1620 provides stored data according to a request of the processor 1630. The memory 1620 may be referred to as a storage unit.

The processor 1630 controls overall operations of the electronic device. For example, the processor 1630 transmits and receives a signal through the transceiver 1610. Also, the processor 1630 writes and reads data to and from the memory 1620. The processor 1630 may be referred to as a control unit. To this end, the processor 1630 may be configured with a plurality of processors or may include at least one sub-processor. According to various embodiments, the processor 1630 may control the electronic device to perform operations according to various embodiments described in the present disclosure.

In embodiments, a method performed by a first distributed unit (DU) is provided. The method may comprise transmitting, to a second DU, a setup request message through a communication interface between the first DU and the second DU. The method may comprise receiving, from the second DU, a setup response message. The setup request message may include at least one of identification information related to the first DU or cell information for each cell provided by the first DU. The setup response message may include at least one of identification information related to the second DU and address information related to the second DU.

For example, the setup request message may include at least one of information indicating whether the first DU supports a carrier aggregation (CA) function between DUs and information indicating whether the first DU supports a dual connectivity (DC) function. The setup response message may include at least one of information indicating whether the second DU supports the CA function between DUs or information indicating whether the second DU supports the DC function.

For example, the method may comprise transmitting, to the second DU through the communication interface, a modification request message. The method may comprise receiving, from the second DU, a modification response message. The modification request message may include at least one of identification information related to the first DU, address information related to the first DU, version information of the first DU, cell information for each cell provided by the first DU, information indicating whether the first DU supports the CA function between DUs, or information indicating whether the first DU supports the DC function. The modification response message may include at least one of identification information related to the second DU, address information related to the second DU, version information of the second DU, cell information for each cell provided by the second DU, information indicating whether the second DU supports the CA function between DUs, or information indicating whether the second DU supports the DC function.

For example, the method may comprise receiving, from a central unit (CU), a user equipment (UE) context modification request message. The method may comprise transmitting, to the CU, a UE context modification response message. The UE context modification request message may include information on one or more secondary cells (SCells). In a case that the one or more SCells include a cell provided by the second DU, the setup request message or the modification request message may be generated based on the context modification request message.

For example, the method may comprise transmitting, to the second DU through the communication interface, an SCell configuration setup request message. The method may comprise receiving, from the second DU through the communication interface, an SCell configuration setup response message. The first DU may provide a primary cell (PCell) in the CA between Dus. The second DU may provide an SCell in the CA between DUs.

For example, the SCell configuration setup request message may include information on the PCell and information on one or more candidate SCells. The SCell configuration setup request message may include configuration information of at least one SCell among the one or more candidate SCells. The configuration information may include at least one of a parameter of at least one radio link control (RLC) layer, a parameter of at least one medium access control (MAC) layer, and/or a parameter of at least one physical (PHY) layer in the corresponding cell.

For example, the method may comprise transmitting, to the second DU through the communication interface, an SCell configuration modification request message. The method may comprise receiving, from the second DU through the communication interface, an SCell configuration modification response message. The first DU may provide a primary cell (PCell) in the CA between Dus. The second DU may provide an SCell in the CA between DUs.

For example, the SCell configuration modification request message may include at least one of address information, bearer information, band combination and feature set, cell-radio network temporary identity (C-RNTI) information, or DC-related capability information. The SCell configuration modification response message may include address information and modified SCell-specific configuration information. The configuration information may include at least one of a parameter of at least one RLC layer, a parameter of at least one MAC layer, and/or a parameter of at least one PHY layer in the corresponding cell.

For example, the SCell configuration modification response message may include information on an SCell for which the SCell configuration modification has failed and information on a cause of the failure.

For example, the method may comprise receiving, from the second DU through the communication interface, an SCell configuration modification request message. The method may comprise transmitting, to the second DU through the communication interface, an SCell configuration confirmation message. The first DU may provide a PCell in the CA between Dus. The second DU may provide an SCell in the CA between DUs.

For example, the method may comprise transmitting, to the second DU through the communication interface, an SCell configuration release request message. The method may comprise receiving, from the second DU through the communication interface, an SCell configuration release completion message. The SCell configuration release request message may include information on a cause of a release of an SCell configuration for the second DU. The first DU may provide a PCell in the CA between DUs. The second DU may provide an SCell in the CA between DUs.

For example, the setup request message may include dynamic spectrum sharing (DSS) information indicating whether a center frequency and a bandwidth of a long term evolution (LTE) cell in the first DU are identical to a center frequency and a bandwidth of a new radio (NR) cell, respectively. The setup response message may include DSS information indicating whether a center frequency and a bandwidth of an LTE cell in the second DU are identical to a center frequency and a bandwidth of an NR cell, respectively.

For example, the setup request message may include cell state information indicating whether each cell provided by the second DU is activated or deactivated. The setup response message may include cell state information indicating whether each cell provided by the second DU is activated or deactivated.

In embodiments, an electronic device of a first distributed unit (DU) is provided. The electronic device may comprise at least one processor, and memory storing instructions. The instructions, when executed by the at least one processor, may cause the electronic device to transmit, to a second DU through a communication interface between the first DU and the second DU, a setup request message, and receive, from the second DU, a setup response message. The setup request message may include at least one of identification information related to the first DU and cell information for each cell provided by the first DU. The setup response message may include at least one of identification information related to the second DU and cell information for each cell provided by the second DU.

According to embodiments, an electronic device of a first distributed unit (DU) is provided. The electronic device may comprise memory, at least one transceiver, and at least one processor coupled to the memory and the at least one transceiver. The at least one processor may be configured to transmit, to a second DU, a setup request message through a communication interface between the first DU and the second DU. The at least one processor may be configured to receive, from the second DU, a setup response message. The setup request message may include at least one of identification information related to the first DU or cell information for each cell provided by the first DU. The setup response message may include at least one of identification information related to the second DU and address information related to the second DU.

The instructions, when executed by the at least one processor, may cause the electronic device to perform a corresponding operation. In other words, the at least one processor may be configured to perform the corresponding operation.

For example, the at least one processor may be configured to receive, from a central unit (CU), a user equipment (UE) context modification request message, and transmit, to the CU, a UE context modification response message. The UE context modification request message may include information on one or more secondary cells (SCells). In a case that the one or more SCells include a cell provided by the second DU, the setup request message or the modification request message may be generated based on the context modification request message.

For example, the at least one processor may be configured to transmit, to the second DU through the communication interface, an SCell configuration setup request message, and receive, from the second DU through the communication interface, an SCell configuration setup response message. The first DU may provide a primary cell (PCell) in the CA between Dus. The second DU may provide an SCell in the CA between DUs.

For example, the SCell configuration setup request message may include information on the PCell and information on one or more candidate SCells. The SCell configuration setup request message may include configuration information of at least one SCell among the one or more candidate SCells. The configuration information may include at least one of a parameter of at least one radio link control (RLC) layer, a parameter of at least one medium access control (MAC) layer, and/or a parameter of at least one physical (PHY) layer in the corresponding cell.

For example, the at least one processor may be configured to transmit, to the second DU through the communication interface, an SCell configuration modification request message, and receive, from the second DU through the communication interface, an SCell configuration modification response message. The first DU may provide a primary cell (PCell) in the CA between Dus, and the second DU may provide an SCell in the CA between DUs.

For example, the SCell configuration modification request message may include at least one of address information, bearer information, band combination and feature set, cell-radio network temporary identity (C-RNTI) information, or DC-related capability information. The SCell configuration modification response message may include address information and modified SCell-specific configuration information. The configuration information may include at least one of a parameter of at least one RLC layer, a parameter of at least one MAC layer, and/or a parameter of at least one PHY layer in the corresponding cell.

For example, the SCell configuration modification response message may include information on an SCell for which the SCell configuration modification has failed and information on a cause of the failure.

For example, the at least one processor may be configured to transmit, to the second DU through the communication interface, an SCell configuration modification request message, and receive, from the second DU through the communication interface, an SCell configuration confirmation message. The first DU may provide a PCell in the CA between Dus. The second DU may provide an SCell in the CA between DUs.

For example, the at least one processor may be configured to transmit, to the second DU through the communication interface, an SCell configuration release request message, and receive, from the second DU through the communication interface, an SCell configuration release completion message. The SCell configuration release request message may include information on a cause of a release of an SCell configuration for the second DU. The first DU may provide a PCell in the CA between Dus. The second DU may provide an SCell in the CA between DUs.

Various embodiments of the present document may be implemented as software including one or more instructions stored in a storage medium readable by a machine (e.g., DU, PCell-DU, SCell-DU). For example, the machine may call and execute at least one of the one or more instructions stored from the storage medium. This makes it possible for the machine to be operated to perform at least one function according to the at least one instruction called. The one or more instructions may include code generated by a compiler or code that may be executed by an interpreter. A machine-readable storage medium may be provided in a form of a non-transitory storage medium. Herein, 'non-transitory' only means that the storage medium is a tangible device and does not include a signal (e.g., electromagnetic wave), and this term does not distinguish between a case where data is stored semi-permanently in storage media and a case where it is temporarily stored. O-RAN makes it possible to configure a virtualized intelligent network with a standardized open interface. For network virtualization, operations according to embodiments may be implemented in the form of a recording medium (e.g., memory).

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

1. A method performed by a first distributed unit (DU), the method comprising:
transmitting, to a second DU, a setup request message through a communication interface between the first DU and the second DU; and
receiving, from the second DU, a setup response message,
wherein the setup request message includes at least one of identification information related to the first DU or cell information for each cell provided by the first DU, and
wherein the setup response message includes at least one of identification information related to the second DU and address information related to the second DU.

2. The method of claim 1,
wherein the setup request message includes at least one of information indicating whether the first DU supports a carrier aggregation (CA) function between DUs and information indicating whether the first DU supports a dual connectivity (DC) function, and
wherein the setup response message includes at least one of information indicating whether the second DU supports the CA function between DUs or information indicating whether the second DU supports the DC function.

3. The method of claim 2, further comprising:
transmitting, to the second DU through the communication interface, a modification request message; and
receiving, from the second DU, a modification response message,
wherein the modification request message includes at least one of identification information related to the first DU, address information related to the first DU, version information of the first DU, cell information for each cell provided by the first DU, information indicating whether the first DU supports the CA function between DUs, or information indicating whether the first DU supports the DC function, and
wherein the modification response message includes at least one of identification information related to the second DU, address information related to the second DU, version information of the second DU, cell information for each cell provided by the second DU, information indicating whether the second DU supports the CA function between DUs, or information indicating whether the second DU supports the DC function.

4. The method of claim 1, further comprising:
receiving, from a central unit (CU), a user equipment (UE) context modification request message; and
transmitting, to the CU, a UE context modification response message,
wherein the UE context modification request message includes information on one or more secondary cells (SCells), and
wherein, in a case that the one or more SCells include a cell provided by the second DU, the setup request message or the modification request message is generated based on the context modification request message.

5. The method of claim 1, comprising:
transmitting, to the second DU through the communication interface, an SCell configuration setup request message; and
receiving, from the second DU through the communication interface, an SCell configuration setup response message,
wherein the first DU provides a primary cell (PCell) in the CA between DUs, and
wherein the second DU provides an SCell in the CA between DUs.

6. The method of claim 5,
wherein the SCell configuration setup request message includes information on the PCell and information on one or more candidate SCells,
wherein the SCell configuration setup request message includes configuration information of at least one SCell among the one or more candidate SCells, and
wherein the configuration information includes at least one of a parameter of at least one radio link control (RLC) layer, a parameter of at least one medium access control (MAC) layer, and/or a parameter of at least one physical (PHY) layer in the corresponding cell.

7. The method of claim 1, comprising:
transmitting, to the second DU through the communication interface, an SCell configuration modification request message; and
receiving, from the second DU through the communication interface, an SCell configuration modification response message,
wherein the first DU provides a primary cell (PCell) in the CA between DUs, and
wherein the second DU provides an SCell in the CA between DUs.

8. The method of claim 7,
wherein the SCell configuration modification request message includes at least one of address information, bearer information, band combination and feature set, cell-radio network temporary identity (C-RNTI) information, or DC-related capability information,
wherein the SCell configuration modification response message includes address information and modified SCell-specific configuration information, and
wherein the configuration information includes at least one of a parameter of at least one RLC layer, a parameter of at least one MAC layer, and/or a parameter of at least one PHY layer in the corresponding cell.

9. The method of claim 8,
wherein the SCell configuration modification response message further includes information on an SCell for which the SCell configuration modification has failed and information on a cause of the failure.

10. The method of claim 1, comprising:
receiving, from the second DU through the communication interface, an SCell configuration modification request message; and
transmitting, to the second DU through the communication interface, an SCell configuration confirmation message,
wherein the first DU provides a PCell in the CA between DUs, and
wherein the second DU provides an SCell in the CA between DUs.

11. The method of claim 1, further comprising:
transmitting, to the second DU through the communication interface, an SCell configuration release request message; and
receiving, from the second DU through the communication interface, an SCell configuration release completion message,
wherein the SCell configuration release request message includes information on a cause of a release of an SCell configuration for the second DU,
wherein the first DU provides a PCell in the CA between DUs, and
wherein the second DU provides an SCell in the CA between DUs.

12. The method of claim 1,
wherein the setup request message includes dynamic spectrum sharing (DSS) information indicating whether a center frequency and a bandwidth of a long term evolution (LTE) cell in the first DU are identical to a center frequency and a bandwidth of a new radio (NR) cell, respectively, and
wherein the setup response message includes DSS information indicating whether a center frequency and a bandwidth of an LTE cell in the second DU are identical to a center frequency and a bandwidth of an NR cell, respectively.

13. The method of claim 1,
wherein the setup request message includes cell state information indicating whether each cell provided by the second DU is activated or deactivated, and
wherein the setup response message includes cell state information indicating whether each cell provided by the second DU is activated or deactivated.

14. An electronic device of a first distributed unit (DU), comprising:
at least one processor; and
memory storing instructions,
wherein the instructions, when executed by the at least one processor, cause the electronic device to:
transmit, to a second DU through a communication interface between the first DU and the second DU, a setup request message; and
receive, from the second DU, a setup response message,
wherein the setup request message includes at least one of identification information related to the first DU and cell information for each cell provided by the first DU, and
wherein the setup response message includes at least one of identification information related to the second DU and cell information for each cell provided by the second DU.

15. The electronic device of claim 14,
wherein the at least one processor is configured to perform any one of the methods according to claims 2 to 14.
